(19) Europäisches Patentamt
European Patent Office
Office européen des brevets

(11) **EP 3 188 373 B1**

(12) **EUROPEAN PATENT SPECIFICATION**

(45) Date of publication and mention
of the grant of the patent:
**26.09.2018  Bulletin 2018/39**

(51) Int Cl.:
***H04B 7/024*** (2017.01)

(21) Application number: **15307185.7**

(22) Date of filing: **30.12.2015**

(54) **FAST DISTRIBUTED CLUSTERING FOR COOPERATION IN TELECOMMUNICATIONS NETWORKS**

SCHNELLES VERTEILTES CLUSTERING FÜR ZUSAMMENARBEIT IN TELEKOMMUNIKATIONSNETZWERKEN

GROUPAGE RÉPARTI RAPIDE POUR UNE COOPÉRATION DANS DES RÉSEAUX DE TÉLÉCOMMUNICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.07.2017  Bulletin 2017/27**

(73) Proprietors:
• **Mitsubishi Electric R&D Centre Europe B.V.**
**1119 NS  Schiphol Rijk Amsterdam (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **KHANFOUCI, Mourad**
**35708 Rennes Cedex 7 (FR)**
• **BRUNEL, Loïc**
**35708 Rennes Cedex 7 (FR)**

(74) Representative: **Cabinet Plasseraud**
**66, rue de la Chaussée d'Antin**
**75440 Paris Cedex 09 (FR)**

(56) References cited:
**US-A1- 2013 267 239**

• **DI LORENZO PAOLO ET AL: "Distributed Estimation and Control of Algebraic Connectivity Over Random Graphs", IEEE TRANSACTIONS ON SIGNAL PROCESSING, IEEE SERVICE CENTER, NEW YORK, NY, US, vol. 62, no. 21, 1 November 2014 (2014-11-01), pages 5615-5628, XP011560917, ISSN: 1053-587X, DOI: 10.1109/TSP.2014.2355778 [retrieved on 2014-10-06]**
• **BERTRAND A ET AL: "Seeing the Bigger Picture: How Nodes Can Learn Their Place Within a Complex Ad Hoc Network Topology", IEEE SIGNAL PROCESSING MAGAZINE, IEEE SERVICE CENTER, PISCATAWAY, NJ, US, vol. 30, no. 3, 1 May 2013 (2013-05-01), pages 71-82, XP011514758, ISSN: 1053-5888, DOI: 10.1109/MSP.2012.2232713**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Background**

**Technical field**

The present invention relates to methods and systems for enabling cooperation between nodes in communications networks. More particularly, the invention relates to the scaling of methods of cooperation to include large numbers of nodes and dynamic sets of nodes wherein nodes may join or leave a cooperating set. More particularly still, the invention relates to such methods and systems for use in a fifth-generation (5G) telecommunication network. The invention also relates to computer programs for implementing such methods.

**Related art**

Current telecommunications technologies, such as fourth generation (4G) network technologies, employ clustering techniques such as clustering for the setting of multipoint transmission (CoMP). CoMP is a set of different techniques that allow two or more base stations in a network to cooperate in the transmission of signals to user equipment (UE) (i.e. a user terminal) and/or the reception of signals from a UE. By operating the base stations in cooperation, improvements in data throughput can often be obtained.

For example, in a cellular network, whilst a signal will normally be well received by a UE located near the centre of a cell, the signal available near the edge of a cell will often be degraded both by the increased distance of the UE from the cell base station, and also by interference from one or more neighbouring cells. By configuring base stations to cooperate, they can act to provide joint scheduling and transmissions and/or provide joint processing of received signals.

Thus, on the down link side, two or more base stations can simultaneously transmit the same information to a UE to improve the received signal strength, and also use coordinated beamforming to direct signals specifically to the UE. On the uplink side, the base stations can jointly receive and process a signal from a UE to reduce the effects of interference from neighbouring cells.

A set of base stations or nodes that are employing such cooperation is termed a cooperating set. Such cooperating sets are formed via a process of "clustering". The clustering process involves defining sets of base stations that are able to coordinate their transmissions so as to allow for an improvement in the throughput of user terminals but with low, or at least manageable, increase in the signalling overhead.

The term node is used within this document to refer to any entity that participates in the provision of wireless telecommunications in the network in question. Thus, for example a node will often take the form of a traditional base station (node) that provides telecommunications for a 4G and/or 5G cellular network. However, nodes can also take the form of femtocells, picocells, microcells, WiFi routers and so forth.

The development of cooperating networks of nodes poses two distinct problems:

> 1. Firstly, a determination of the cooperation capabilities of the nodes together with a determination of cooperating sets of nodes with similar cooperation capabilities must be made;
> 2. Secondly, a determination of low overhead signalling methods for establishing fast cooperation and updating of the cooperating sets must also be achieved.

To deal with the first problem it is generally necessary to first determine a network invariant for a node, in order to know with which other node or nodes of the network it should cooperate in a manner to usefully serve user terminals. Moreover it must also be determined how to create relevant cooperating sets for efficient implementation of this cooperation.

In CoMP, the clustering process involves defining sets of nodes that are coordinating their transmission for improving the throughput of user terminals with low and manageable signalling overhead. These sets are called cooperating sets.

The clustering technique used in CoMP employs Reference Signal Received Power (RSRP) measurements received from the user terminals to determine the initial coarse cooperation set. Subsequently, this cooperating set is then split into $K$ dynamic cooperating sets by solving a joint knapsack combinatory optimization problem in order to achieve the following conditions:

- Minimize the overall size of each set and maximize the number of user terminals that would benefit from CoMP performed by the cooperating set; and
- Ensure that each node is member of at least one cooperating set.

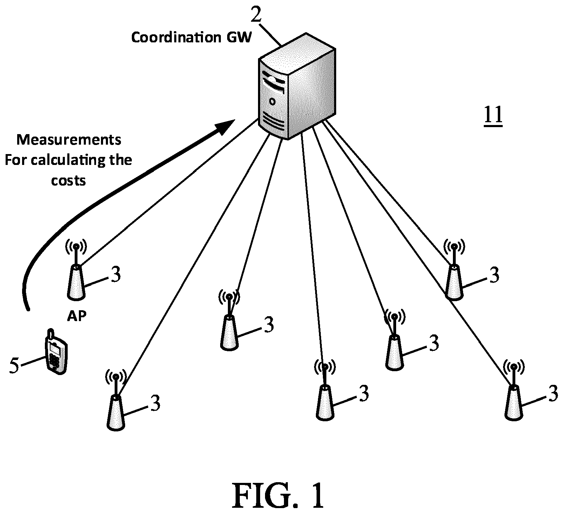

These conditions are illustrated in figure 1. In figure 1, a set of nodes 3 are all in communication with a coordination gateway 2. As noted above, each of the nodes 3 can take the form of a traditional base station in a cellular telecommunications network. Thus, each node 3 can form a wireless communications link with a user terminal 5 (UE). The nodes 3 can form cooperating clusters in order to enhance the communications with the user terminal 5 as described above.

Clustering for cooperation under CoMP employs searches, over all of the possible groups from the initial coarse cooperating set of nodes, for clusters that optimize the above listed condition. The solution of the optimization problem is performed at the Self Optimized Network (SON) server in the Operation and Maintenance (OAM) of the LTE Core network and is tractable for medium sized initial cooperating set. Thus, CoMP tends to work well in existing 4G networks.

However future networks, such as 5G networks, are likely to require higher node densities than current networks and also are likely to employ a variety of different node types. The term "heterogeneous network" is used within this document to refer to networks that contain a plurality of different types of node, wherein the term node is as defined above.

The determination of the cooperating sets in a large, densely connected, heterogeneous network is also a form of clustering problem. Thus, the determination of cooperating sets in large heterogeneous network is also a problem involving the casting the nodes into groups with similar cooperation capabilities. These cooperation capabilities are defined per node for a user terminal, a group of user terminals attached to the node, a moving user terminal or a group of moving user terminals. Some nodes of the network may be moving.

In such future high density heterogeneous networks, the state-of-the-art CoMP technique will tend to scale badly with the number of nodes. In other words, the optimization problem complexity increases with the number of nodes and the update of the cooperating sets is slow because of the delay in solving the global knapsack combinatory optimization.

The present invention is therefore aimed at improving the efficiency and scalability of cooperating set formation in high density heterogeneous or homogeneous networks. More specifically, the invention provides means for autonomous cooperating set formation that can provide cooperative services to user terminals or groups of user terminals with high mobility.

Document: Bertrand A et Al: "Seeing the bigger picture: How nodes can learn their place within a complex ad hoc network topology" IEEE Signal Processing Magazine, IEEE Service Center, Piscataway NJ, US vol. 30, no. 3, 1 May 2013 pages 71-82 ISSN:1053-5888, DOI:10.1109/MSP.2012.2232713 discloses methods for employing networks of nodes, such as processors, for performing distributed calculation of an algorithm. The method employs weighted graphs of the network for calculating suitable clusters of nodes.

Document: DI Lorenzo Paolo et al: "Distributed estimation and control of algebraic connectivity over random graphs", IEEE transactions on signal processing, IEEE Service Center, New York, NY, US, vol. 62, no. 21, 1 November 2014, pages 5615-5628, ISSN1053-587X, DOI:10.1109/TSP.2014.2355778 discloses methods of providing estimation and control of connectivity in an ad-hoc network.

## Summary

In a first aspect, there is provided a method of clustering nodes in a telecommunications system according to claim 1.

Thus, advantageously, there is provided a method wherein nodes in a network can be divided into clusters in a manner that takes account of the ability of the nodes to cooperate with one another. The method can be scaled easily to include large numbers of nodes that potentially have different cooperation capabilities. Moreover, the method permits easy recalculation of the clusters to permit its use in a dynamic environment, such as in a situation where nodes are moving.

Thus, advantageously, a simply derived measure can be used in the consensus averaging step, thereby enabling a rapid consensus averaging to be performed.

In some embodiments, the average quadratic form of the Laplacian matrix is defined as:

$$e(k) = \sum_{i=1}^{n} \sum_{j=1}^{n} L_{i,j} x_i(k) x_j(k)$$

where $L_{i,j}$ is the value of the Laplacian at the line $i$ and the column $j$. This average quandratic form of the Laplacian is approximated as the average disagreement function, e(k) between the states of the nodes in the graph:

$$e(k) \approx \sum_{i=1}^{n} e_i^2(k) .$$

Thus, advantageously, by employing this approximation, the consensus averaging can be completed in a single step per iteration. Consensus averaging is a technique that comprises exchanging information between the nodes of the network, such as the state of each node after the convergence of the consensus averaging, which is equal to the average of the initial states of the nodes.

In some embodiments, the step of performing the consensus averaging further comprises each node initialising its state as the vector:

$$\underline{z}_i(0) = [x_i(k)^2 \; x_i(k) \; e_i^2(k)]$$

where $x_i(k)$ is the state of the node $i$ at the iteration $k$ of the stochastic power iteration;
$x_i(k)^2$ is the squared state of the node $i$ at the iteration $k$ of the stochastic power iteration; and
$e_i^2(k)$ is the squared disagreement between the state of the node $i$ and the state of the neighbouring nodes $j \in N(i)$ and where the consensus averaging update equation is given by the following:

$$\underline{z}_i(m+1) = \underline{z}_i(m) - \varepsilon_c \sum_{j \in N(i)} \underline{z}_j(m)$$

where:

$m$ is the iteration index of the consensus averaging;
the parameter $\varepsilon_c$ controls the convergence rate of the consensus averaging and the amount of the states of the neighbouring nodes to be included in the update of the node $i$.

Thus, advantageously, a simple consensus averaging procedure can be employed.
In some embodiments, when the consensus averaging step reaches convergence, the state of each node converges to the average of the initial states of the nodes as in the relation below:

$$\underline{z}_i(m_0) = \frac{1}{n}\sum_{i=1}^{n} \underline{z}_i(0) = \left[ \frac{1}{n}\sum_{i=1}^{n} x_i(k)^2 \; \frac{1}{n}\sum_{i=1}^{n} x_i(k) \; \frac{1}{n}\sum_{i=1}^{n} e_i^2(k) \right]$$

where:

the index $m_0$ is the number of iterations needed for the convergence of the consensus averaging;

$$m_x(k) = \frac{1}{n}\sum_{i=1}^{n} x_i(k);$$

the average of the states of the network is defined as

$$m_x^2(k) = \frac{1}{n}\sum_{i=1}^{n} x_i(k)^2;$$

the average of the squares of the states of the network is defined as and
the average of the squared disagreement of the states in the network is defined as

$$e^2(k) = \frac{1}{n}\sum_{i=1}^{n} e_i^2(k).$$

Thus, advantageously, a simple consensus averaging procedure can be employed.
In some embodiments, the step of performing the consensus averaging terminates when the state variation, $\delta_z$, of all the nodes in the network between iterations in the consensus averaging is lower than a predetermined threshold, wherein:

$$\delta_z = \left\| \underline{z}_i(m+1) - \underline{z}_i(m) \right\|$$

Thus, advantageously, a simple means of terminating the consensus averaging can be employed.

In some embodiments, x and y are updated during each iteration using equations of the form:

$$y_0(k) = 1 - \varepsilon \frac{e(k)}{m_{x^2}(k)} - \frac{1}{n} \frac{m_x^2(k)}{m_{x^2}(k)}$$

$$x_i(k+1) = \frac{1}{\Omega_x(k)} \left( x_i(k) - \varepsilon \sum_{j \in N(i)} x_j(k) - \frac{1}{n} m_x(k) \right)$$

$$y(k+1) = y(k) + \alpha \left( y_0(k) - y(k) \right)$$

where:

$n$ is the set of all nodes in the communications system; and $\Omega_x$ is a normalisation factor of the Fiedler vector estimation $x$.

Thus the algebraic connectivity and Fiedler vector can be easily calculated from the results of the consensus averaging.

In some embodiments, the normalisation factor, $\Omega_x$, takes the form of:

$$\Omega_x(k) = m_{x^2}(k) + \frac{(n-2)}{n} m_x^2(k) + 2e(k),$$

$$\Omega_x(k) = m_{x^2}(k)$$

or

$$\Omega_x(k) = m_{x^2}(k) + \frac{(n-2)}{n} m_x^2(k) + 2e(k) + 2\frac{m_x(k)\varepsilon \overline{e}_x(k)}{n} + \frac{\varepsilon^2 \overline{e}_x(k)^2}{n}$$

$$\overline{e}(k) = \sum_{i=1}^{n} e_i(k).$$

where $\overline{e}(k)$ is defined as the average disagreement,

Thus, advantageously, the stability and the convergence speed of the stochastic power iteration algorithm can be improved.

In some embodiments, the power iteration technique is repeatedly applied until the magnitude of the value $\|y(k+1) - y(k)\|$ is below a predetermined threshold.

Thus, advantageously, the power iteration technique can easily be terminated once a suitable convergence has been obtained.

In some embodiments, the cooperation utility function comprises one or more of:

i) a function of the inverse of the transmission delay between each node and a wired core network;
ii) a function of the inverse of the transmission delay between nodes;
iii) a function of the current loading or resource utilisation of each node;
iv) a function of the available communication bandwidth provided by each node; or
v) a function of the signal to noise and interference ratio, SINR at each node.

Thus, advantageously, a simple measure of the ability of the nodes to cooperate can be employed. Moreover by setting the cooperation to achieve a low delay and/or low loading, this so can lead to an improvement in the overall throughput of the at user equipment that is in the coverage of the nodes.

In some embodiments, the cooperation utility function is a differential cooperation utility function that is calculated on the basis of the relative values of the cooperating utility function at each node with respect to another node in the telecommunications system.

Thus, advantageously, the clustering can be performed on the basis of a relative measure of the ability of the nodes to cooperate.

In some embodiments, the cooperation graph comprises links between nodes and wherein two nodes are linked if the value of the cooperation utility function between them is below a threshold value.

In some embodiments, the nodes are divided into two clusters, and each node is a member of a first cluster if the Fiedler vector entry for that node is positive.

Thus, advantageously, there is provided simple means by which clusters of nodes can be formed and by which the nodes can join/leave the clusters autonomously.

In some embodiments the consensus matrix, B, is defined by:

$$B = W - \frac{1}{n}\underline{1}\underline{1}^T$$

where:

$$W = I - \varepsilon L$$

and where:

I is the identity matrix;
N is the number of nodes in the graph;
L is the Laplacian matrix of the graph;
$\varepsilon$ is a small number that is a function of the maximum eigenvalue of the Laplacian matrix;
$\underline{1}$ is vector having entries that are all 1; and
$\underline{1}^T$ is the transpose of vector $\underline{1}$.

Thus, advantageously, there is provided simple means by which the Fiedler vector and algebraic connectivity can be calculated.

In a second aspect, there is provided an apparatus for determining the clustering nodes in a telecommunications system according to claim 13.

In further aspects there is provided a computer program product comprising computer readable instructions which, when implemented on a processor perform all of the steps of the method of any first aspect, and a computer readable medium comprising such a computer program.

## Brief description of the drawings

The invention will now be described with reference to the accompanying Figures of which:

Figure 1 illustrates a cellular communications network of the prior art;
Figure 2 illustrates a cellular communications network applying clustering of communications nodes according to an embodiment of the invention;
Figure 3a illustrates a method of performing node clustering according to embodiments of the invention;
Figure 3b illustrates a method of forming a cooperation graph according to embodiments;
Figure 3c illustrates a general method of calculating the Fiedler vector and algebraic connectivity of the cooperation graph of figure 3b according to embodiments;
Figure 3d illustrates a prior art implementation of a stochastic power iteration for the calculation of figure 3c;
Figure 3e illustrates an implementation of a stochastic power iteration for the calculation of figure 3c according to an embodiment;
Figure 4a illustrates a network as an example for performing clustering according to embodiments of the invention;
Figure 4b illustrates the network of figure 4a, with the nodes arranged in clusters according to embodiments of the invention;
Figure 5 illustrates a method of clustering nodes according to embodiments of the invention;
Figure 6 illustrates another method of clustering nodes according to embodiments;
Figure 7 illustrates a method of clustering nodes according to the embodiments of figure 5;
Figure 8 illustrates a method of clustering nodes according to the embodiments of figure 6;
Figure 9 illustrates an example comparison of the determination of the algebraic connectivity of a system by applying an embodiment of the invention compared to prior art determinations;

Figure 10 illustrates a comparison of the signal-to-interference-plus-noise ratio obtained by applying an embodiment of the invention compared to prior art determinations of the signal-to-interference-plus-noise ratio; and
Figure 11 illustrates the iterations required to obtain consensus by applying embodiments of the invention in comparison to prior art iterative techniques.

## Detailed Description

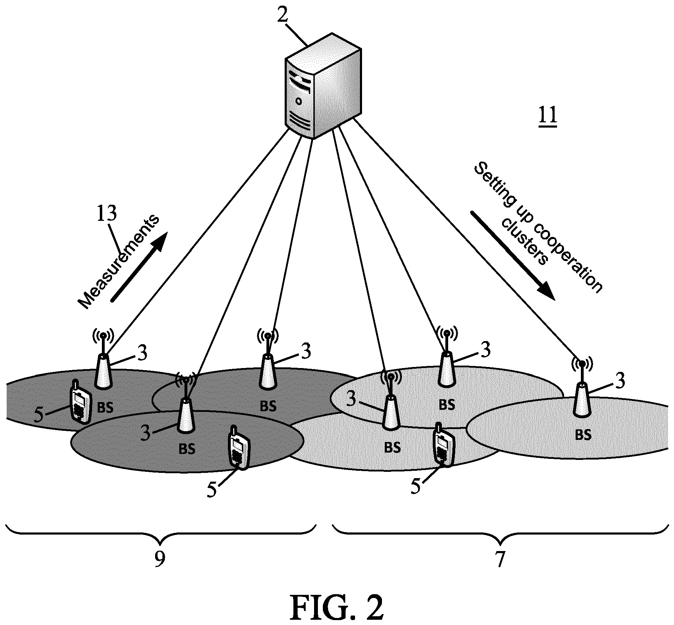

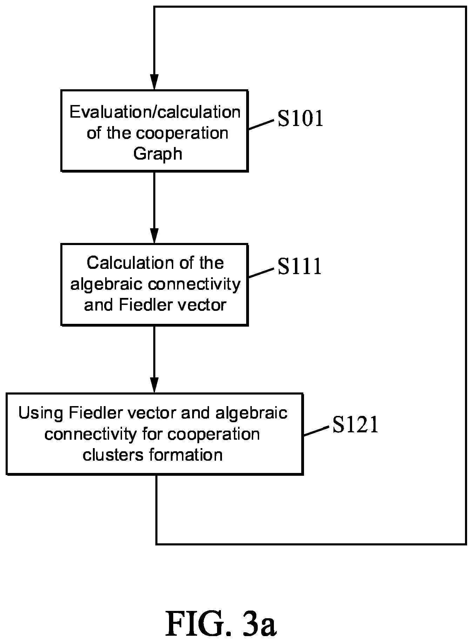

Figure 2 illustrates a simplified network 11 capable of employing methods according to an embodiment of the invention. As illustrated in figure 2 a central node 2 is configured to control a plurality of base stations (i.e. nodes) 3. The collection of nodes 3 together form a cellular network 11 in which UE 5 can communication with the node 3. Typically, this communication will be with the node 3 that is currently physically closest to the particular UE 5. As illustrated in figure 2, the nodes 3 are grouped into two different clusters; 7, 9 termed cooperating sets. Each cluster 7, 9 is illustrated to comprise three nodes 3, although in principle a cluster can comprise any number of nodes 3. Each node 3 sends 13 measurement values of a cooperation utility function to the central node 2 as a part of the process of cluster formation. This is described below with reference to figures 3a-3c.

In order for a node 3 to determine whether to join or leave a cooperating set 7, 9, and to identify its influence within the network 11 of cooperating sets 7, 9, i.e. as member of a set or as a "gateway" between several sets, the invention employs techniques inspired from *social networks analysis* to provide each node 3 with one or more clustering metrics.

One such metric employed is based on the eigenvalues and/or eignevectors of a cooperation graph that can be calculated either at the central node 1, that has the full topological information knowledge, or cooperatively by the nodes 3 themselves.

This cooperation utility function can then be used to characterize the "a priori" cooperation capabilities of each node 3 as well as the possibility for cooperation between each pair of nodes 3 in the network 11.

An advantage of this type of clustering is to provide the nodes with a local community indicator that helps each node to identify other nodes with which cooperation is/would be helpful for at least one of the user terminals in the coverage of the nodes 3. This local community indicator reduces the delay for the establishment of cooperation between nodes and therefore increases the overall reactivity of the cooperation in the network.

Subsequently, the cooperation capabilities of the nodes are described and the community indicator will be described as a solution to the cooperation graph minimum ratio cut optimization problem.

Figure 3a illustrates an example of a method according to an embodiment. In a first step S101, a cooperation graph of the nodes 3 in a network is determined. Secondly S111, the algebraic connectivity and Fiedler vector of the cooperation graph are determined. Finally, the nodes 3 are formed S121 into clusters using the determined Fiedler vector and algebraic connectivity. As illustrated in figure 3a, the method can be applied repeatedly to update the clusters as propagation conditions and/or network topology changes over time. This change in conditions can, for example, be the addition or removal of a UE 5 or node 3 within the network, or a motion of a UE 5 or node 3 within the network 11.

There now follows a detailed description of the method, illustrated in figure 3a, of determining clusters of nodes 3 in a network 11.

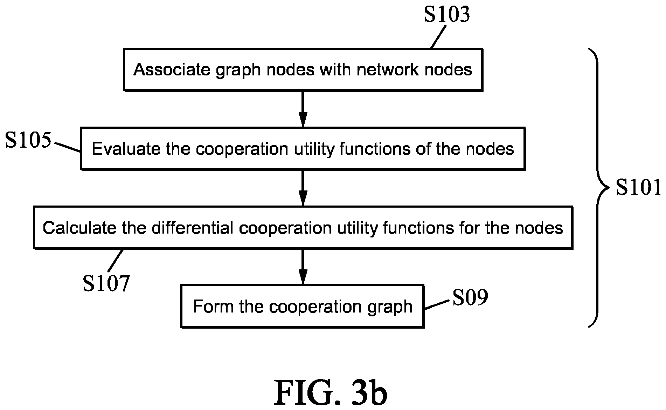

A cooperation graph is defined to be a representation of the cooperation relations in the network 11, or in a region of the network 11. The process S101 of determining a cooperation graph includes the steps described below, which are illustrated in figure 3b.

### First step

In a first step, each node of the cooperation graph is associated S103 with a node 3 of the network 11 and each node 3 evaluates S105 a cooperation utility function.

The cooperation utility function, $U_j$, for a node j is a function expressing the cooperation capabilities of the nodes 3.

In a first example, in some embodiments, the cooperation utility function of a node *j* is a function of the inverse of the transmission delay over the backhaul for the node *j*. Here, the term backhaul refers to the communication link between the node in question and the core network serviced by the node to allow communication between the node and other node or other parts of the network. This communication link is typically provided via a microwave link or wired connection, such as a fibre-optic link.

If the cooperation utility function is defined in this manner, then it can be expressed as:

$$U_j = f\left(\frac{1}{\tau_j}\right).$$

Thus, the cooperation utility function is at maximum for low transmission delay values, i.e. $U_j = U_{\max}$ if $\tau_j = 0$ and $U_j = U_{\min}$ when the delay is large, i.e. $\tau_j > \tau_t$, where $\tau_t$ is the maximum tolerable delay for cooperation.

In a second example, in alternative embodiments, the cooperation utility function is a function of the current load or resource utilization of the node $j$. In this case the node $j$ can cooperate if its load is below a threshold $\rho_0$. Thus the cooperation utility function, $U_j$, can be expressed as:

$$U_j = g\left(\frac{\rho_0}{\rho_j}\right)$$

Here, the cooperation utility function, $U_j$, is at maximum value $U_j = U_{\max}$ for high values of $\frac{\rho_0}{\rho_j}$ and $U_j = U_{\min}$ for low values of $\frac{\rho_0}{\rho_j}$.

In a third example, in further alternative embodiments, the cooperation utility function, U, is a function of the bandwidth of the node $j$. Thus the cooperation utility function, U, can be expressed as:

$$U_j = L\left(BW_j\right)$$

Where $BW_j$ signifies the bandwidth of the node.

In a fourth example, the cooperation utility function, $U_j$, can be expressed as a function of the signal to interference and noise ratio (SINR) at the node $j$. Thus, the cooperation utility function, $U_j$, can be expressed as:

$$U_j = K\left(SINR_j\right).$$

Where SINR signifies the signal to interference and noise ratio.

In the third and fourth examples, the cooperation utility function is at its maximum value either when the bandwidth of the node $j$ is above a minimum bandwidth for cooperation $BW_0$ or when the signal to interference ratio to the node $j$ is above minimum SINR necessary for the cooperation establishment $SINR_0$.

In a fifth example, in further alternative embodiments, the cooperation utility function of the node $j$ is the product of one or more of the cooperation utility functions presented previously. For example, it can be expressed as:

$$U_j = f\left(\frac{1}{\tau_j}\right)g\left(\frac{\rho_0}{\rho_j}\right)L\left(BW_j\right)K\left(SINR_j\right).$$

Whilst one example of a cooperation utility function using a product of the previously described utility functions is given here, the skilled person will recognize that equally other such utility functions can be derived from functions of two or more of the above described cooperation utility functions.

### Third step

In a third step S107, the differential cooperation utility, $\delta U_{i,j}$, function is calculated for each pair of nodes $(i, j)$. In the presently described embodiment, this calculation is performed locally at the nodes themselves. Thus, for the examples discussed above, the following is calculated:

In the first example described above (where the cooperation utility function of a node $j$ is a function of the inverse of the transmission delay over the wired backhaul for the node $j$), the differential cooperation utility function is the difference between the individual cooperation utility functions of the nodes $i$ and $j$, or the absolute value of this difference. Thus, it can be expressed as:

$$\delta U_{i,j} = U_i - U_j \text{ or } \delta U_{i,j} = \left| U_i - U_j \right|.$$

In the second example described above (where the cooperation utility function is a function of the current load or resource utilization of the node $j$), the differential cooperation utility function is the sum of the difference between the cooperation utility functions and a function of the wireless backhaul delay (radio propagation delay) $\theta_{ij}$ between the nodes $i$ and $j$. Thus, it can be expressed as:

$$\delta U_{i,j} = q\left(\frac{1}{\theta_{ij}}\right) + \left(U_i - U_j\right).$$

In the third and fourth examples described above (where the cooperation utility function is a function of the bandwidth of the node $j$, i.e. $U_j = L(BW_j)$, or a function of the signal to interference and noise ratio at the node $j$, i.e. $U_j = K(SINR_j)$), the differential utility function is the sum of the difference between the utility functions and a function of the wired backhaul delay $\Omega_{ij}$ between the nodes $i$ and $j$. Thus, it can be expressed as:

$$\delta U_{i,j} = p\left(\frac{1}{\Omega_{ij}}\right) + \left(U_i - U_j\right).$$

In the fifth example described above (where the cooperation utility function of the node $j$ is the product of one or more of the cooperation utility functions presented previously), the differential cooperation utility function is the sum of the difference between the cooperation utility functions and function of the product of the wireless and wired backhaul delays. Thus, it can be expressed as:

$$\delta U_{i,j} = p\left(\frac{1}{\Omega_{ij}}\right) q\left(\frac{1}{\theta_{ij}}\right) + \left(U_i - U_j\right).$$

**Fourth step**

In a fourth step S109, the cooperation graph is formed, based on the differential cooperation utility functions as follows:
In the first example described above, the nodes $i$ and $j$ are linked by an edge in the cooperation graph if the differential cooperation utility function between the nodes $i$ and $j$ is below a threshold, i.e. $\delta U_{ij} \le u$. Otherwise, the nodes $i$ and $j$ are not connected by an edge in the cooperation graph.
Within this document the term "edge", as used in reference to cooperation graphs, is used in the sense of graph theory, wherein it denotes a link between two nodes within a graph.
In the second example described above, the nodes $i$ and $j$ are linked by an edge in the cooperation graph if the node $j$ is among the $k$ neighbouring nodes of the node $i$ with the smallest differential cooperation utility function or the node $i$ is among the $k$ neighbouring nodes of the node $j$ with the smallest differential utility function.
In the third and fourth examples described above, the nodes $i$ and $j$ are linked by an edge in the cooperation graph if the node $j$ is among the $k$ neighbouring nodes of the node $i$ with the smallest differential cooperation utility function and the node $i$ is among the $k$ neighbouring nodes of the node $j$ with the smallest differential cooperation utility function.
In the fifth example described above, the nodes $i$ and $j$ are linked by an edge in the cooperation graph if the similarity between the cooperation utilities of the nodes $i$ and $j$ is above a threshold.

$$\text{i.e. } \exp\left(-\frac{\left|\delta U_{i,j}\right|^2}{\sigma^2}\right) \ge K$$

Here $\sigma, K$ are parameters that are fixed by the core network. The parameter $\sigma$ controls the average cooperation capabilities between the members of a cooperating group, while the parameter $K$ controls the dissimilarity in cooperation between the different cooperating groups in the network. Thus, the core network can adapt the cooperation to the changing traffic in the network increasing cooperation between the nodes in region with higher traffic intensity and decreasing the cooperation in region with lower traffic.

In all of the examples described above, the edges of the cooperation graph can be either unweighted as described previously or weighted with the following weights: $\delta U_{i,j}$ for the edge between the nodes $i$ and $j$.

Thus, in embodiments where such weighting is used, the edge between the nodes *i* and *j* is weighted with a similarity function:

$$W_{i,j} = \exp\left(-\frac{\left|\delta U_{i,j}\right|^2}{\sigma^2}\right)$$

The cooperation graph is computed in order to determine which nodes can efficiently cooperate with each other. One criterion is how the cooperation should be beneficial to at least a maximum number of user terminals. For instance, a good wired backhaul between the nodes and the core network can allow the nodes to receive higher throughput and so improve the throughput gain of the user terminals from cooperation. Another criterion is the quality of the wireless backhaul between the nodes that allow the higher throughput to be exchanged between the nodes during cooperation. This wireless backhaul quality can be obtained through radio proximity between the nodes, rendered by the SINR or wireless propagation delay between two nodes. Another possible criterion is related to the overall resource usage in the network. For example, in cooperative multipoint transmission (CoMP), similar data is transmitted from at least two cooperating nodes to at least one user terminal UE. In order to transmit cooperatively this data to the users, resources should be reserved at the nodes so nodes with high enough bandwidth and/or low load are highly improving the throughput of the CoMP users.

Once the cooperation graph is obtained, the next step is to use the cooperation graph for the calculation of the algebraic connectivity and the Fiedler vector (S111 in figure 3a). Subsequently, these can be used S121 (in figure 3a) to allow clustering of the nodes 3.

The clustering envisioned by the invention comprises clustering the nodes of the cooperation graph into distinct clusters, such that the number of edges within each cluster is maximized and the number of edges connecting different clusters is minimized.

## Example of clustering

There now follows an example of clustering the nodes in a cooperation graph into two distinct clusters $K_1$ and $K_2$ and the problem formulation as a minimum cut set optimization problem. The skilled person will be familiar with the term minimum cut as used in relation to graph theory, and so a further explanation will not be provided here.

Consider the clustering of the nodes of a cooperation graph into two clusters $K_1$ and $K_2$, having $L(K_1,K_2)$ edges connecting the clusters $K_1$ and $K_2$ and having the connectivity (i.e. number of edges)= $|K_1|,|K_2|$

A clustering method employed by the present invention finds the clusters with the biggest sizes and that are having the lowest number of edges connecting them. Thus, this method minimizes the ratio cut, i.e. the function where:

$$\rho(K_1, K_2) = \frac{\left|L(K_1, K_2)\right|}{|K_1||K_2|}$$

This general clustering for ratio cut minimization is a non polynomial hard combinatory optimization problem (NP-hard). Thus, no exact and efficient polynomial time algorithm exists for general graph topologies.

Spectral graph clustering techniques are approximate techniques for the approximation of minimum ratio cut clustering optimization. Spectral clustering is based on the idea that the minimum ratio cut optimization problem can be converted into a linear optimization problem, wherein the eigenvector corresponding to the second smallest eigenvalue of the Laplacian matrix of the cooperation graph is a solution for the minimum ratio cut optimization.

The eigenvector entry for the node *j*, $v_j$, can be interpreted as the community indicator for the node *j*. In other words:

The node *j* belongs to the cluster $K_1$ if $v_j > 0$, and
node *j* belongs to the cluster $K_2$ otherwise.

Here, $v_j$ is defined as is the j$^{th}$ entry of the second smallest eigenvector of the Laplacian matrix.

This community indicator is known as the Fiedler vector $\underline{F}$ and the corresponding eigenvalue $\lambda$ is known as the algebraic connectivity.

For a graph of $N$ nodes and a partition $(K_1, K_2)$, the algebraic connectivity provides a lower bound on ratio cut $\rho(K_1, K_2)$ as:

$$\min_{K_1, K_2} \rho(K_1, K_2) \geq \frac{\lambda}{N}$$

Where $\min_{K_1, K_2} \rho(K_1, K_2)$ is the minimum ratio cut obtained over all the possible partitions $(K_1, K_2)$. The ratio cut is defined above.

Assuming that we want equally sized partitions: $|K_1| = |K_2|$, this relation will provide us with a heuristic on the

$$|K| = \sqrt{N \frac{|L(K_1, K_2)|}{\lambda}} \ .$$

cluster size, i.e. at most, we will have clusters of size

The Fiedler vector provides a heuristic that describes the structure of the clusters, i.e. a metric that provides to each node the information about the clusters of nodes to which it belongs. In the example of the two clusters mentioned previously, the Fiedler vector element $v_i$ of the node $i$ provides the information that the node is member of cluster $K_1$ if $v_i > 0$. Otherwise the node is member of the cluster $K_2$ if $v_i \leq 0$.

The nodes with Fiedler vector elements close to 0, i.e. the node with $|v_i| \leq \delta$ for a small real number $|\delta| < 1$, are the bridge or gateway nodes that connect the clusters $K_1$ and $K_2$. These are nodes, beyond which, a terminal (UE) may have to change to another cooperating set.

## Application of the Stochastic power iteration

In the described embodiment, the calculation of the algebraic connectivity and the Fiedler vector is performed through a stochastic power iteration technique. The principle of the power iteration technique is to iteratively search for the maximum eigenvalue and the corresponding normalized eigenvector of a modified consensus matrix instead of the second minimum eigenvalue and the corresponding eigenvector of the cooperation graph Laplacian. A consensus matrix, W, can be defined as the following:

$$W = I - \varepsilon L$$

Where:

I is the identity matrix,
N is the number of nodes in the graph,
L is the Laplacian matrix,
$\varepsilon$ is a small number that is a function of the maximum eigenvalue of the Laplacian matrix,
$\underline{1}$ is vector having entries that are all 1, and
$\underline{1}^T$ is the transpose of the above vector.

From this, a modified consensus matrix, B, can be defined as:

$$B = W - \frac{1}{n}\underline{1}\underline{1}^T$$

This modified consensus matrix is the consensus matrix having a maximum eigenvalue that is the second minimum eigenvalue of the Laplacian matrix.

The Laplacian matrix is defined as the difference between the degree matrix of the nodes and the adjacency matrix of the graph. Two different definitions of the adjacency matrix of the graph can be employed:

Firstly, the adjacency matrix A of the graph can be defined as the binary matrix where the element $A_{i,j} = 1$ if the nodes $i$ and $j$ are connected by an edge in the cooperation graph, otherwise the element $A_{i,j} = 0$.

Secondly, the adjacency matrix $A$ of the graph can be defined as the matrix where the element $A_{i,j}$ is equal to the similarity between the nodes $i$ and $j$, i.e. $A_{i,j}=W_{i,j}$ if the nodes $i$ and $j$ are connected by an edge, otherwise the element $A_{i,j}=0$.

The degree matrix D is the diagonal matrix where the entries are the sum of the rows of the adjacency matrix:

$$D = diag\{D_{ii}\} \text{ and } D_{jj} = \sum_{i=1}^{N} A_{ij}$$

Again, $N$ is the number of nodes in the graph.

With theses definitions, the Laplacian matrix is defined as:

$$L = D - A$$

As noted above, the parameter $\varepsilon$ is a small parameter that is function of the maximum eigenvalue of the Laplacian matrix. One possible technique for the determination of the parameter $\varepsilon$ is to use the power iteration technique described next for the determination of the maximum eigenvalue of the Laplacian, denoted as $\lambda_0$. The parameter $\varepsilon$ can be defined

as $\varepsilon = \dfrac{1}{\lambda_0}$. The consensus parameter $\varepsilon_c$ can be defined as equal to the parameter defined above; i.e. $\varepsilon_c = \varepsilon$ or can be

defined as lower than the parameter, giving $\varepsilon_c = \dfrac{1}{2\lambda_0} \leq \varepsilon$.

The power iteration technique then calculates iteratively (S111 in figure 3a) the algebraic connectivity and the Fiedler vector of the graph via a stochastic power iteration method.

The stochastic power iteration, employed by embodiments of the present invention, is an iterative technique for calculating the maximum eigenvalue and the corresponding eigenvector of the modified consensus matrix $B$. The maximum eigenvalue corresponds to the algebraic connectivity of the cooperation graph that is describing how well the cooperation graph is connected and that serves for the sizing of the cooperating sets or clusters. The corresponding eigenvector, i.e. the Fiedler vector, provides a metric for the nodes to be added to the cooperation clusters.

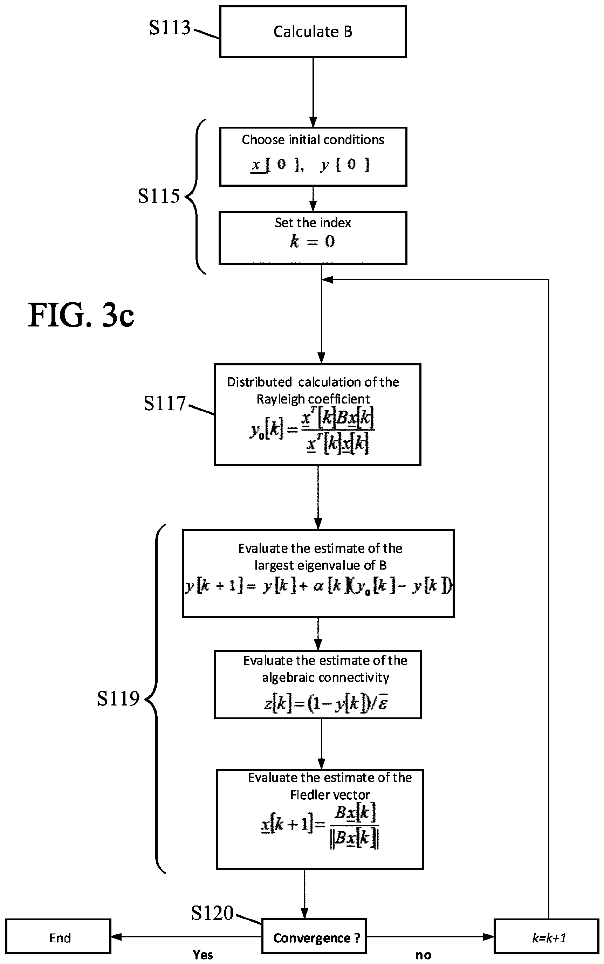

The basic steps of the stochastic power iteration known from the state of the art are as follows and are illustrated in figure 3c, and are described below:

1) Firstly, the modified consensus matrix $B$ is calculated S113 from measurements of user terminals in a "deployment region". Here, the deployment region corresponds to some arbitrary region, of a large network, in which the method of the present invention is to be applied.

2) Next, each node initializes S115 its states to a random value and sets an index, k, of the iteration equal to zero. Two states are considered per node:

   a) $y_i(0)$ that is used for the calculation of the algebraic connectivity and
   b) $x_i(0)$ that is used for the calculation of the Fiedler vector element for the node $i$.

3) Subsequently, the Rayleigh coefficient is calculated S117 iteratively. At each iteration, $k$ of the stochastic power iteration, the Rayleigh coefficient of the system is calculated as: $y_0(k) = \dfrac{\underline{x}^T(k)B\underline{x}(k)}{\underline{x}^T(k)\underline{x}(k)}$ and each node updates its algebraic connectivity state estimation as $y_i(k+1) = y_i(k) + \alpha(y_0(k) - y_i(k))$. The gradient step is set to $\alpha = \dfrac{\alpha_0}{(k+1)}; |\alpha_0| < 1$ with $\alpha_0$ being setup by the network.

4) The Fiedler vector state is then updated S119 as $\underline{x}(k+1) = \dfrac{B\underline{x}(k)}{\|B\underline{x}(k)\|}$ where the vector $\underline{x}(k)=[x_1(k),...x_n(k)]^T$.

5) Finally, it is tested S120 whether the algorithm has converged. The algorithm converges when the algebraic connectivity states variation is below a predetermined threshold, i.e. $\delta=|y(k+1)-y(k)|<Th.$

In step 5 S120, where convergence of the power iteration is tested, if the power iteration technique converges, i.e. if $y \approx y_0$ within a predefined limit, then the algorithm stops. Otherwise the algorithm is reiterated by repeating from S117. Upon convergence, the converged values of the Fiedler vector and algebraic connectivity are output. The Fiedler vector is given by the last state vector $\underline{x}$ and the algebraic connectivity is given by the parameter $y$.

The Fiedler vector and algebraic connectivity can then be used to determine suitable cluster formation (i.e. the cooperating groups of nodes). An example of such cluster formation is described below.

## Specific example of cluster formation and dimensioning

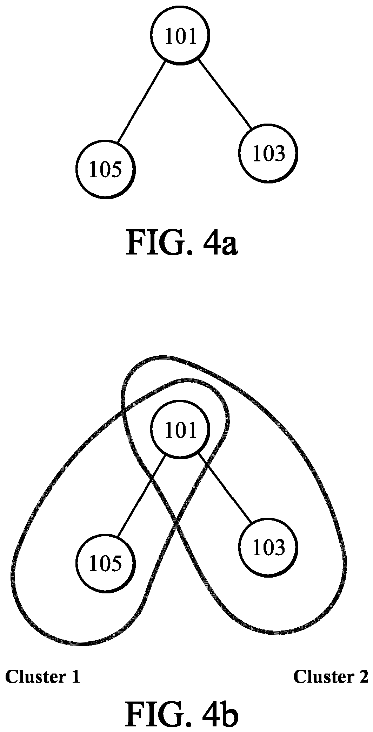

As a simple specific example of the method of cluster formation, consider the network with three nodes as illustrated in figure 4a. In the illustrated network, the nodes are labelled 101, 103 and 105, cooperation is possible between node 101 and 103, and between 101 and 105. However, there is direct cooperation possible between nodes 105 and 105.

Without loss of generality, the example illustrates the proposed clustering for a network of three nodes where the cooperation graph is described by a binary adjacency matrix, i.e. only maximum cooperating nodes are left in the adjacency matrix representation of the cooperation relations in the network.

The skilled person will recognize that the adjacency matrix A of the network is given by the following matrix equation:

$$A = \begin{bmatrix} 0 & 1 & 1 \\ 1 & 0 & 0 \\ 1 & 0 & 0 \end{bmatrix}$$

In the matrix equation, rows one to three and columns one to three each represent nodes 101, 103 and 105 respectively. An entry of 0 indicates that the nodes are not included in the cooperation relations, while an entry of 1 indicates that cooperation is maximum. Thus, in the first row node 101 can cooperate with both nodes 103 and 105. "self-cooperation" e.g. node 101 cooperating with itself is trivial, and so excluded from the equation. Hence, the leading diagonal of the matrix is represented with zeros.

As noted above, the degree matrix is the diagonal matrix where the entries are the sum of the rows of the adjacency matrix. The Laplacian matrix of the above matrix equation is in turn defined as the degree matrix $D$ minus the adjacency matrix. Thus, the Laplacian matrix, L, in this example is given as:

$$L = \underbrace{\begin{bmatrix} 2 & 0 & 0 \\ 0 & 1 & 0 \\ 0 & 0 & 1 \end{bmatrix}}_{D} - \underbrace{\begin{bmatrix} 0 & 1 & 1 \\ 1 & 0 & 0 \\ 1 & 0 & 0 \end{bmatrix}}_{A} = \begin{bmatrix} 2 & -1 & -1 \\ -1 & 1 & 0 \\ -1 & 0 & 1 \end{bmatrix}$$

Also as noted above, the modified consensus matrix is obtained from the Laplacian matrix via the following equation:

$$B = I - \varepsilon L - (1/n)\underline{1}\,\underline{1}^T$$

Where $I$ is the identity matrix of size 3x3 (in this specific example), N is the number of the nodes in the network (N=3 in this specific example), $\underline{1}$ is a vector of ones of size 3 (in this specific example). The parameter $\varepsilon$ is set in this example as $\varepsilon=1/3$. The modified consensus matrix is therefore given as:

$$B = \begin{bmatrix} 0 & 0 & 0 \\ 0 & 0.333 & -0.333 \\ 0 & -0.333 & 0.333 \end{bmatrix}$$

The algebraic connectivity is obtained as the maximum eigenvalue of the matrix *B* and the Fiedler vector is the corresponding eigenvector. The skilled person will recognize from this that in the present example, these parameters are given as:

$$\lambda = 0.6667$$

$$F = [0 \quad -0.7071 \quad 0.7071]$$

The algebraic connectivity determines the size of the cooperation clusters, i.e. the number of nodes per cooperation cluster $N_c$ as $N_C = \sqrt{n/\lambda} \approx 2$.

The Fiedler vector value determines to which cluster the node is belonging. For two clusters:

- The node 101 is cluster head and it is a member of cluster (1) and cluster (2) since its Fiedler vector value is 0.
- The node 103 belongs to cluster (1) since its Fiedler vector value is negative.
- The node 105 is belongs to cluster (2) since its Fiedler vector value is positive.

Thus, the clustering in this specific example may be summarized as illustrated in figure 4b. As illustrated in figure 4b, the nodes are arranged into two clusters, with nodes 101 and 103 in a first cluster and nodes 101 and 105 in a second cluster. The skilled person will recognize that this is a trivial example for the purposes of illustration. In general, there is no limitation on the number of nodes that can be considered during the clustering process, and also no particular limitation on the number of clusters into which they can be divided. Moreover, depending upon the particular situation in question, there is also no limitation on the number of nodes that are present within each cluster, and in general the number of nodes in clusters will differ between clusters. Further, there is no limitation on the number of cluster to which each particular node within a network may belong.

Two different embodiments of the invention are described below for the calculation of the algebraic connectivity and the Fiedler vector:

- Firstly, a semi-centralized technique where a central entity is has the full knowledge of the states of all of the nodes in the network, and of the matrix *B.* The central entity calculates the algebraic connectivity estimate *y(k)* and Fiedler vector estimate $\underline{x}(k)$ through the algorithm described below.

- Secondly, a distributed technique where global knowledge of the state vector $\underline{x}(k)$ is not available at the nodes. In this case, the algebraic connectivity *y(k)* and the normalized states vector $\underline{x}(k)$ are calculated cooperatively between the nodes, based on *consensus averaging* techniques between any pair of nodes for each iteration *k* of the stochastic power iteration.

As noted above, the known stochastic power iteration technique is based on the calculation of global quantities in order to update the algebraic connectivity state $y_i(k)$ and the Fiedler vector state $x_i(k)$ of each node *i* and the key global quantity is the Rayleigh coefficient $y_0(k) = \dfrac{\underline{x}^T(k)B\underline{x}(k)}{\underline{x}^T(k)\underline{x}(k)}$. Prior art techniques for the distributed estimation of the Rayleigh coefficient are based on two-step consensus averaging as follows:
We first define an additional modified consensus vector as:

$$\underline{b}(k) = B\underline{x}(k) = W\underline{x}(k) - \underline{1}\left(\frac{1}{n}\left(\underline{1}^T \underline{x}(k)\right)\right)$$

The Rayleigh coefficient is written with regard to the consensus vector as:

$$y_0(k) = \frac{\underline{x}^T(k)\underline{b}(k)}{\underline{x}^T(k)\underline{x}(k)}$$

The state of the art distributed calculation of the Raleigh coefficient is equivalent to the calculation of two averages of the Fiedler vector states.

$$m_x(k) = \left(\frac{1}{n}\left(\underline{1}^T \underline{x}(k)\right)\right)$$

- The first average calculates the average of the states in order to obtain the modified consensus vector $\underline{b}(k)$
- The second average jointly obtains the weighted average $\underline{x}^T(k)\underline{b}(k)$ and the average of the squares $\underline{x}^T(k)\underline{x}(k)$ in order to obtain the Rayleigh parameter.

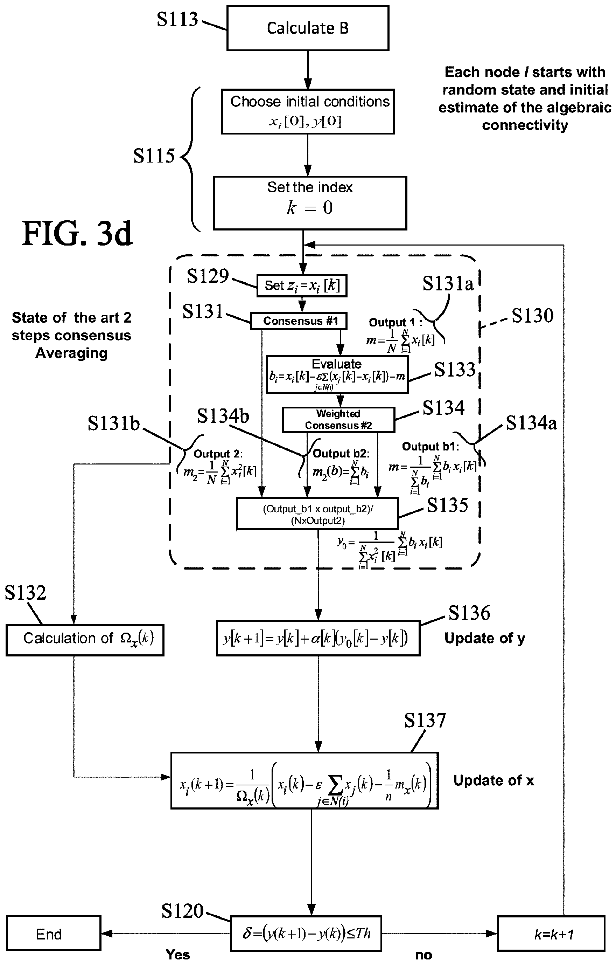

Thus, in known prior art techniques, these two consensus averaging steps must be carried out during each iteration of the stochastic power iteration. This is illustrated in figure 3d.

As illustrated in figure 3d, B is calculated S113 and $x_i[0]$, $y_i[0]$ and k=0 are all set S115 as per the general description above in relation to figure 3c.

Subsequently, the two-step consensus process S130 is implemented. In this, in an initial step S129, the state of z is initialised. Subsequently, a first consensus is calculated in step S131. This first consensus step has two outputs, output1 calculates the state average S131a, and the second output calculates the squared state average (output 2) S131b. The state average from S131a is then used for the calculation S133 of the modified consensus average vector $\underline{b}(k)$ as the following

$$b_i(k) = x_i[k] - \varepsilon \sum_{j \in N(i)}\left(x_j[k] - x_i[k]\right) - output_1$$

The parameter $output_1$ is the state average given as: $$output_1 = \frac{1}{n}\sum_{j=1}^{n} x_j[k]$$ and the parameter $\varepsilon$ is the parameter of the stochastic power iteration.

Subsequently, a second consensus is calculated in step S134. This second consensus step has two outputs, output1 calculates an output b1 which is defined as m S134a, and the second output, b2, which calculates $m_2$ (output 2) S134b.

The outputs b1 and b2 are defined as the following respectively:

$$m_b[k] = \frac{\sum_{i=1}^{n} b_i(k)x_i[k]}{\sum_{i=1}^{n} b_i(k)} \; ; \; m[k] = \sum_{i=1}^{n} b_i(k)$$

These output values (b1 and b2) are used for the calculation S135 of the Rayleigh coefficient as the following:

$$y_0(k) = \frac{m_b[k]m[k]}{n\,output_2}$$

Subsequently, the values of y S136 and x S137 can be updated and used for testing S120 of the convergence as described above in relation to figure 3c. Separately, a normalisation function can be calculated S132 for use in the process of updating x S137. The skilled person will recognise hoe to perform and use such a normalisation function and so further explanation will not be provided here.

A basic problem with state of the art distributed calculations of $y(k)$ is that it tends to have slow convergence, since the weighted consensus should start after the convergence of the consensus averaging #1 S131 step. The embodiments described in the present application are directed to the speeding up of this distributed calculation of the algebraic connectivity and the Fiedler vector by merging the two consensus steps, S131 and S134 of figure 3d into a single modified consensus averaging step.

**First Embodiment**

An aim of the present invention is to speed up the Fiedler vector calculation step by merging the two consensus rounds of the state of the art algorithm into a single consensus averaging step. To this end it is noted that the Rayleigh coefficient and the Fiedler vector estimates at step $k$ of the stochastic power iteration method can be written as:

$$y_0(k) = 1 - \varepsilon \frac{\underline{x}^T(k) L \underline{x}(k)}{m_{x^2}(k)} - \frac{1}{n} \frac{m_x^2(k)}{m_{x^2}(k)}$$

$$\underline{x}(k+1) = \underline{x}(k) - \varepsilon L \underline{x}(k) - \frac{1}{n} \underline{1} m_x(k)$$

The parameters $m_x(k), m_{x2}(k)$ are respectively the sums of the states and sums of the squares of the states over the network $(m_x(k) = \underline{1}^T \underline{x}(k); m_{x2}(k) = \underline{1}^T \underline{x}^2(k))$. The parameters are obtained through a single consensus averaging step. The basic problem consists of the evaluation of the quantity $e(k) = \underline{x}^T(k) L \underline{x}(k)$

Thus, in the present invention, this quantity is approximated using a function that can be calculated along with the consensus averaging step used to obtain $m_x(k), m_{x2}(k)$. Developing $e(k)$ we obtain:

$$e(k) = \sum_{l=1}^{n} \sum_{i \in N(l)} x_l(k)\left(x_l(k) - A_{l,i} x_i(k)\right)$$

The quantity $\underline{x}^T(k) L \underline{x}(k)$ is approximated as the average disagreement function between the states of the nodes in the graph. Rewriting both the algebraic connectivity and the Fiedler vector, and defining the squares of the states as $m_{x2} = \underline{x}^T(k) \underline{x}(k)$, yields:

$$y_0(k) = 1 - \varepsilon \frac{e(k)}{m_{x^2}(k)} - \frac{1}{n} \frac{m_x^2(k)}{m_{x^2}(k)}$$

$$\underline{x}(k+1) = \underline{x}(k) - \varepsilon L \underline{x}(k) - \frac{1}{n} 1 m_x(k)$$

In order to calculate the estimates in a single consensus averaging step, it is necessary to note that disagreement function can be written as the following average:

$$e(k) \approx \sum_{i=1}^{n} \sum_{j \in N(i)} \left(x_i(k) - x_j(k)\right)^2 = \sum_{i=1}^{n} e_i^2(k)$$

where $N(i)$ is defined as the set of neighbours of the node $i$ in the graph.

The disagreement function can be obtained by an average consensus algorithm and a single consensus averaging step may be used to jointly calculate the parameters $m_{x2}(k), m_x(k), e(k)$.

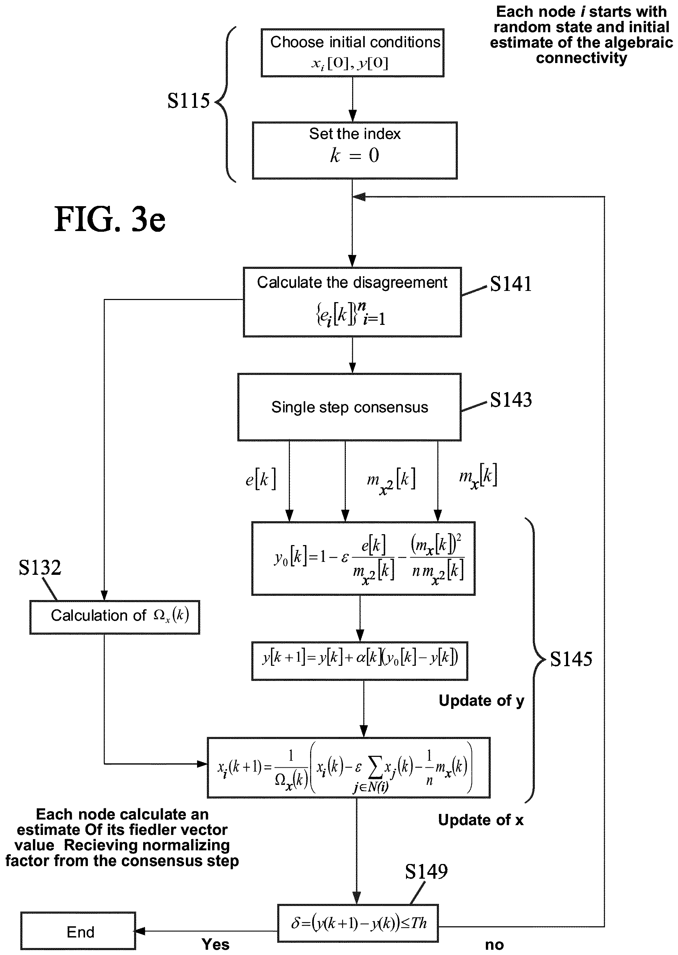

The steps of the fast Fiedler vector calculation are illustrated in figure 3e and described below for each iteration, $k$, of the stochastic power iteration technique:

1. Firstly, the modified consensus matrix $B$ is calculated S113 [not illustrated] from measurements of user terminals in a "deployment region" as described above in the known implementation of the stochastic power iteration technique. Here, the deployment region corresponds to some arbitrary region, of a large network, in which the method of the present invention is to be applied.

2. Next, each node initializes S115 its states to a random value and sets an index of the iteration, k=0. Two states are considered per node:

 a. $y_i(0)$ that is used for the calculation of the algebraic connectivity and
 b. $x_i(0)$ that is used for the calculation of the Fiedler vector element for the node $i$.

3. Each node $i$ then calculates S141 the average squared disagreement between its state $x_i(k)$ and the states of its

$$e_i^2(k) = \sum_{j \in N(i)} (x_i(k) - x_j(k))^2$$

neighbours $x_j(k)$, i.e. calculates                         prior to the actual consensus step. In alternative embod-

$$e_i(k) = \sum_{j \in N(i)} (x_i(k) - x_j(k))$$

iments, the function                         is also calculated in this step.

4. The average consensus step S143 is performed to find the
parameters $m_{x2}(k), m_x(k), e(k)$ such that:

 a. Each node initializes its consensus states to the state $\underline{z}_i(0) = [x_i(k)^2 x_i(k) e^2_i(k)]$

$$\underline{z}_i(k+1) = \underline{z}_i(k) - \varepsilon_c \sum_{j \in N(i)} \underline{z}_j(k)$$

 b. Each node updates its state in the consensus step as :                         where the pa-
 rameter $\varepsilon$ is the feedback parameter of the consensus and $N(i)$ is the set of neighbours of the node $i$.
 c. Each node evaluates its state variation as $\delta_z = \|z_i(k+1) - z_i(k)\|$. The consensus step converges when the state
 variation is below a threshold.
 d. At convergence, the consensus step outputs the network averages of the states as: $m_{x2}(k), m_x(k), e(k)$.

5. Each node calculates the estimate of the Fielder vector and the algebraic connectivity S145 as:

$$y_0(k) = 1 - \varepsilon \frac{e(k)}{m_{x^2}(k)} - \frac{1}{n} \frac{m_x^2(k)}{m_{x^2}(k)}$$

$$x_i(k+1) = \frac{1}{\Omega_x(k)} \left( x_i(k) - \varepsilon \sum_{j \in N(i)} x_j(k) - \frac{1}{n} m_x(k) \right)$$

$$y(k+1) = y(k) + \alpha(y_0(k) - y(k))$$

where $\Omega_x(k)$ is a normalisation factor, which is separately calculated S132 from the disagreement calculated in S141.
Three options are possible for the normalization factor, $\Omega_x(k)$:

 • The normalization factor is set to the following value:

$$\Omega_x(k) = m_{x^2}(k) + \frac{(n-2)}{n} m_x^2(k) + 2e(k)$$

 • The normalization factor is set to the following value: $\Omega_x(k) = m_{x2}(k)$
 • The normalization factor is set to the following value:

$$\Omega_x(k) = m_{x^2}(k) + \frac{(n-2)}{n} m_x^2(k) + 2e(k) + 2\frac{m_x(k)\varepsilon \bar{e}_x(k)}{n} + \frac{\varepsilon^2 \bar{e}_x(k)^2}{n}$$

where the parameter $\bar{e}(k)$ is de-

$$\bar{e}(k) = \sum_{i=1}^{n} e_i(k).$$

fined as the average disagreement, i.e.                         This parameter is evaluated during the consensus step.

6. Finally, a test for convergence is made S149. The algorithm stops when the average error $\delta = y(k+1)-y(k)$ is below a threshold, Th (i.e. convergence is obtained). Otherwise the algorithm increments the iteration index, k, by one and returns to step S141.

Whilst the update of x is illustrated in figure 3e as following on from the update of y, the skilled person will recognise that these steps S145 can be carried out concurrently.

After the distributed calculation of Fiedler vector is performed, each node of the network will have an estimate of the algebraic connectivity and an estimate of an element of the Fielder vector.

These estimates may be used for the cooperation group formation as described below. The skilled person will recognize that the algorithm can be used in any application which needs a distributed computation of the Fiedler vector.

An advantage of the above described fast distributed calculation of the Fiedler vector and algebraic connectivity is that these clustering metrics are calculated in one consensus averaging step rather than the two steps consensus averaging described in the state of the art systems. As a result, the number of iterations needed for the calculation of the algebraic connectivity and Fiedler vector can be reduced, and the overall reactivity of the cooperation scheme can be optimized.

The last step of the method is to use the Fiedler vector and the algebraic connectivity for cluster formation and dimensioning (i.e. cooperation group formation) as is described generally above in the example of clustering, and in the examples below.

## Cooperation group formation

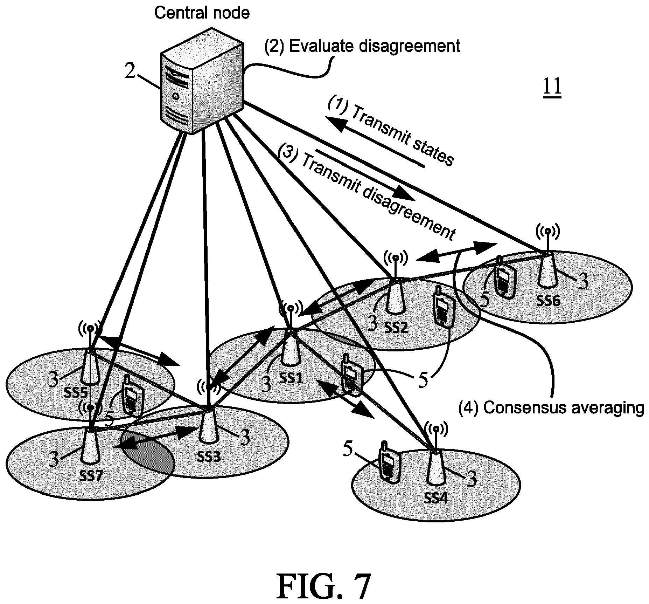

In an embodiment, termed the "semi-distributed embodiment" and illustrated in figure 7,the disagreement be-

$$e_i^2(k) = \sum_{j \in N(i)} \left(x_i(k) - x_j(k)\right)^2$$

tween the states                                   is calculated for all the nodes $i$ of the network in a central node 2 and transmitted back to all the nodes of the network, prior to consensus averaging step. The values of the cooperation utility function are transmitted from each node 3 to the central node 2 for calculation of the cooperation graph at the central node 2. The cooperation graph will be used for setting up the consensus averaging. The Fiedler vector and algebraic connectivity are cooperatively calculated through the distributed stochastic power iteration and consensus averaging described previously.

In this embodiment, the gateway nodes dynamically form clusters with neighbouring nodes. Gateway node are the nodes that form a junction between two different clusters (cooperating groups) of nodes. As illustrated in figure 7 a central node 2 is configured to control a plurality of nodes 3. The collection of nodes 3 together form a cellular network 11 in which a UE (user terminal) 5 can communicate with the nodes 3. Typically, this communication will be with the node 3 that is currently physically closest to the particular UE 5.

In this embodiment, the nodes 3 themselves determine which among them are the gateway nodes.

For the case of two clusters, the gateway nodes 3 are the nodes having the Fiedler vector elements that are closest to the threshold 0. i.e. $|v_i| \leq \mu$. The cluster formation process stop criterion will be based on the algebraic connectivity estimate that is available at the nodes of the network with small Fiedler vector values.

For the case of $M$ clusters, the gateway nodes are nodes 3 with Fiedler vector values *close* to the vector quantization thresholds:

$$\delta_1 = \left(2m/M\right)-1 \,,\, \delta_2 = \left(2(m+1)/M\right)-1; \, m=1,2,...M \,, \text{ i.e. } \left|v_i - \delta\right| \leq \mu$$

The cluster formation process stop criterion will be based on algebraic connectivity estimate that is available at the nodes 3 of the network with Fiedler vector values close to the quantization thresholds.

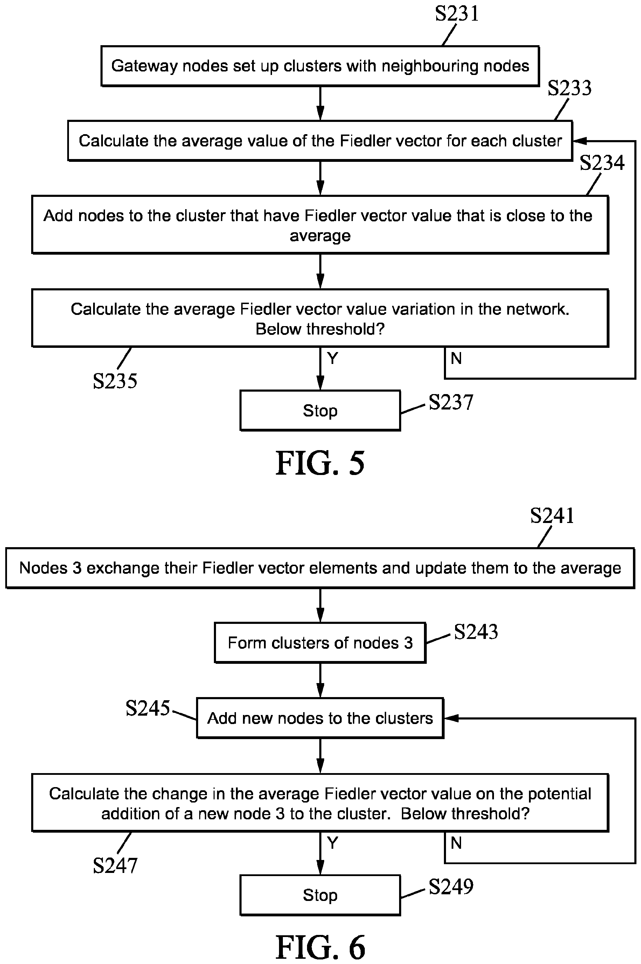

The method of cluster formation is illustrated under this embodiment in figure 5. Firstly, the gateway node 3 sets up S231 cooperation a cluster with neighbouring nodes 3 which have similar values of their Fiedler vector, i.e. the gateway node 3 finds the neighbouring nodes $v_j$ such that their Fiedler vector values are close to each other and limited by a threshold.

Secondly, the average value of the Fiedler vector is calculated S233 for each cluster and new nodes are added S234 to the cluster if their Fiedler vector value is close to the average value of that cluster. This calculation will typically be performed by the gateway node 3.

Thirdly, the central node 2 calculates S235 the average Fiedler vector value variation in the network 11. If this is below a predetermined threshold value, then the method stops S237, if not, then the method repeats from step S233.

In this embodiment, the central node 2 initially evaluates the algebraic connectivity and the Fiedler vector for the full network topology. Once the gateway nodes 3a have determined their local cooperation clusters, the central node 2 reduces the cooperation graph into a subgraph of the clusters, i.e. the central node 2 receives the list of the nodes 3 of the cooperation cluster *i* managed by the gateway node *i* and associates this cluster to a node in a cluster cooperation graph. The clusters are linked by the edges of their gateways. In other words, the central node 2 stores the cooperation graph representing the cooperation between clusters of nodes 3, and so each entry in the stored cooperation graph represents a cluster of nodes 3. The local cooperation relationships are managed in the node clusters.

In an alternative embodiment, the multiple cooperation clustering can be obtained by repeatedly performing two-level clustering until the size of the obtained cooperation clusters close to a threshold that is dependent of the algebraic connectivity. In this case, the number of cooperation clusters is always even.

In a further alternative embodiment, the Fiedler vector and the algebraic connectivity are calculated cooperatively between the nodes of the network. This is an alternative "semi-decentralised" embodiment. Here, a central node 11 provides the parameter $\mu$ for identifying the gateway nodes 3.

For the case of two clusters in this alternative embodiment, the gateway nodes 3 are the nodes having the Fiedler vector elements close to the threshold 0, i.e. $[v_i] \leq \mu$. The cluster formation process stop criterion will be based on algebraic connectivity estimate that is available at the nodes of the network with small Fiedler vector values

For the case of *M* clusters in this alternative embodiment, the gateway nodes 3 are nodes with Fiedler vector values *close* to the vector quantization thresholds:

$$\delta_1 = \left(2m / M\right) - 1, \delta_2 = \left(2(m+1) / M\right) - 1; m = 1,2,...M \text{ ,i.e. } \left|v_i - \delta\right| \leq \mu .$$

The cluster formation process stop criterion will be based on algebraic connectivity estimate that is available at the nodes of the network with Fiedler vector values close to the quantization thresholds.

$$e_i^2(k) = \sum_{j \in N(i)} \left(x_i(k) - x_j(k)\right)^2$$

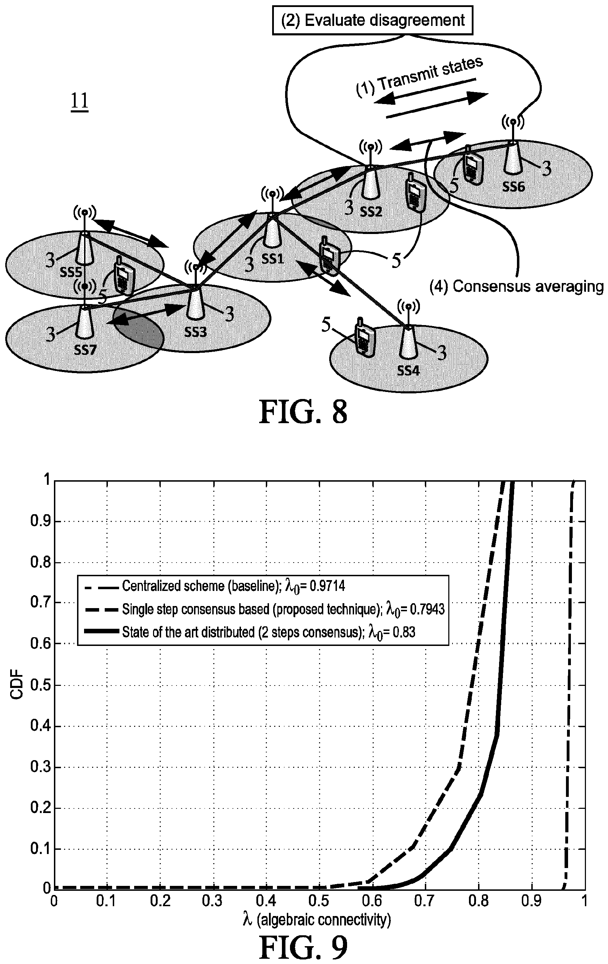

In a further alternative embodiment, the disagreement between the states $e_i^2(k) = \sum_{j \in N(i)} \left(x_i(k) - x_j(k)\right)^2$ is calculated at the node *i* of network and transmitted to neighbouring nodes of the node *i* that are defined by the cooperation graph. Each node of the network calculate the disagreement and then run the consensus averaging step, sequentially. This alternative embodiment is termed the "distributed embodiment" and is illustrated in figure 8. As illustrated in figure 8 a plurality of nodes 3 together form a network. A central node (not illustrated) will normally be present in the network but, since it need not play any part in the clustering process and/or the calculation of the state disagreement described in this embodiment, no such node is illustrated. The collection of nodes 3 together form a cellular network 11 in which a UE 5 can communication with the nodes 3. Typically, this communication will be with the node 3 that is currently physically closest to the particular UE 5.

In this embodiment, the Fiedler vector value and the algebraic connectivity are exchanged between neighbouring nodes 3. The nodes 3 autonomously decide to join/leave the cooperation cluster based on average Fiedler vector values within the cooperation cluster.

The method of cluster formation in this embodiment is illustrated in figure 6. Firstly, the nodes 3 exchange S241 information, i.e. the modified consensus matrix values and/or the differential utility matrix values in order to cooperatively calculate their Fiedler vector elements and the corresponding algebraic connectivity. This calculation is performed by the means of the stochastic power iteration technique where the Rayleigh coefficient is calculated cooperatively by the means of consensus averaging as described above. At each iteration of the stochastic power iteration, the consensus averaging is used by the nodes 3 to calculate the network wide value of the Rayleigh coefficient that will be used to update their Fiedler vector element estimate.

Secondly, clusters of nodes are formed S243. Two options are possible: either the initial clusters are formed as the trivial clusters that are including the said node 3 or the clusters are initiated as the closest *k* nodes of the node 3, *k* is being fixed by the core network or the central entity.

Thirdly, cluster representatives are calculated for the initial clusters. The cluster representative is calculated as the average Fiedler vector values of the *k* nodes in the cluster or the Fiedler vector value of the unique element in the case of trivial cluster initialisation. New nodes are added in S145 to the clusters. A new node 3 will be added to a cluster if the difference between its Fiedler vector element and the cluster representative calculated among the cluster's nodes is below a threshold.

Fourthly, the effect on the average value of the Fiedler vector by the potential addition of a new node 3 to the cluster is determined S247. If the addition of this new node would change the average Fiedler vector elements of the cluster by less than a threshold amount then the clustering diffusion is stopped S249.

Conversely if the change is above the threshold, then the method is repeated from step S245.

The advantage of this embodiment is an increased reactivity to topology change and reduced complexity over the central node. However, one drawback is the extra signalling needed for both clustering and Fiedler vector calculations.

The fast clustering of the described embodiments is useful for taking into account:

- Rapid network topology changes due to moving nodes, like base stations in a vehicle. For instance, radio propagation delays between nodes, SINR at the node, backhaul delay are important factors for taking this network topology into account.
- High terminal mobility (UE). For instance, load or resource utilization of a node is an important factor for taking this network topology into account.

## Performance evaluation

To give an idea of the performance of the techniques of the present invention in comparison to prior art techniques, the following simulation and analysis was carried out as illustrated in figures 9-11.

The simulation scenario is a group of randomly deployed small cells outdoor with a density of 64 small cells/square km. The simulation included simulations of:

- A centralized cooperation scheme, wherein a central node performs the calculations of the Fiedler vector and algebraic connectivity. This is considered as a baseline for the performance.
- The prior art distributed, 2-step consensus averaging technique is also simulated.
- Finally, the semi-centralized single step consensus averaging described as an embodiment of this application is also simulated.

In Figure 9, the cumulative density function of the algebraic connectivity obtained by both distributed algorithms and the centralized algorithm is illustrated. The value of the cumulative density function of a represents the average of algebraic connectivity below the threshold $a$.

As is clear from figure 9, the proposed algorithm slightly underestimates the algebraic connectivity when compared to the state-of-the-art distributed calculation (around 4% degradation). Figure 9 shows the CDF of the average signal to interference and noise ratio (SINR) for a cooperative multipoint transmission system based on a two level clustering. The two level clustering is obtained by splitting the small cells of the test deployment into two clusters obtained by comparing their Fiedler vector entries with the threshold 0. Cooperative multipoint transmission is setup for each cluster, i.e. the nodes of each cluster transmit cooperatively while the nodes in different clusters may interfere. It is seen from figure 9 that the best average SINR is obtained for the centralized clustering scheme, the performance of the two steps consensus averaging based clustering is very similar to the centralized clustering performance. This is showing that the performance in terms of average SINR is similar for the proposed technique to the performance of the baseline system. Thus, low performance degradation is shown for the proposed clustering.

Both algorithms underestimate the algebraic connectivity since the centralized scheme is showing an overall improvement of 14% with respect to both distributed algorithms.

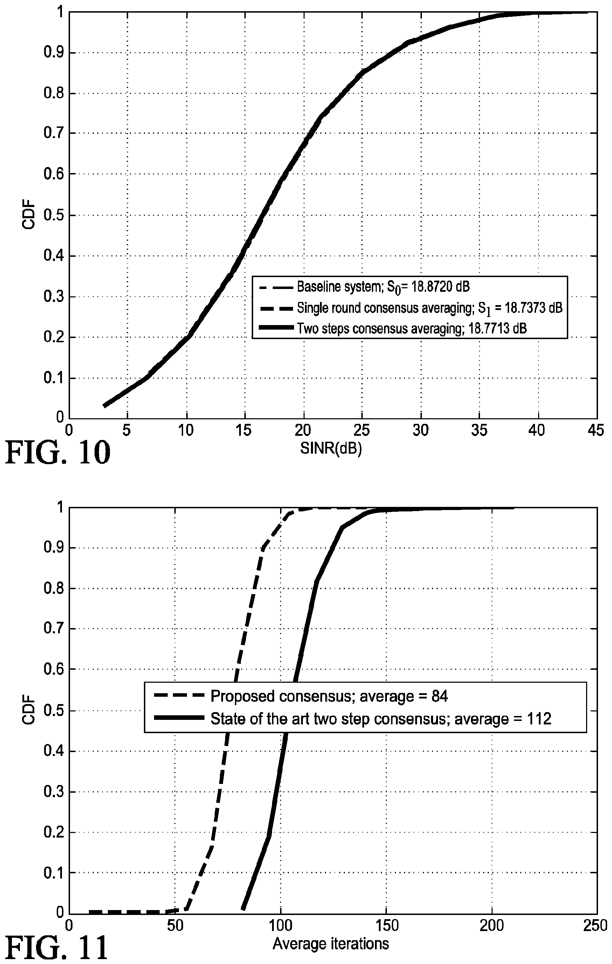

Figure 10 illustrates the CDF of the SINR in the deployment region, assuming an average density of 500 UEs/square km when the Fiedler vector is used for the definition of 2 cooperating sets. We have compared the SINR CDF with the SINR obtained from the use of the Fiedler vector computed with the baseline algorithm.

As is clear from Figure 10, the SINR performance of the proposed distributed calculation is very similar to the prior art system (less than 1% in average SINR) and both systems are quite close to the average performance of the baseline algorithm (around 0.7% maximum discrepancy). The average number of iterations per round of the stochastic power iteration of the described embodiments is compared in Figure 11 to that of the prior art method.

The technique of the described embodiments improves the average complexity (i.e. the average number of iterations per round of the stochastic power iteration technique) by approximately 25%. In other words, in the example calculated, only 84 iterations are required for the SPI of the embodiments to converge. In contrast, convergence using the prior art SPI implementations was only achieved after 112 iterations. In other words, (112-84)/112=26% reduction in the number of iterations required for the described embodiments.

In summary:

- The described technique underestimates the algebraic connectivity (4% degradation with respect to prior art techniques
- Shows similar SINR performance as the prior art
- Reduces the complexity by 25% with regard to the prior art.

Embodiments can be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention as defined in the claims. Furthermore, an embodiment of the present invention may not include all of the features described above. Therefore, it is intended that the present invention not be limited to the particular embodiments disclosed, but that the invention include all embodiments falling within the scope of the invention as defined in the claims. A person skilled in the art will readily appreciate that various parameters disclosed in the description may be modified and that various embodiments disclosed and/or claimed may be combined without departing from the scope of the invention as defined in the claims.

**Claims**

1. A method of clustering nodes (3) in a telecommunications system, comprising a plurality of nodes (3), each of the nodes (3) being configured to communicate with a user equipment (5), the method comprising:

    determining a cooperation utility function for each of the plurality of nodes (3), the cooperation utility function comprising a measure indicative of a capability of the respective node (3) to cooperate with another node (3) in providing communications with the user equipment (5);
    forming (S101) a cooperation graph of the plurality of nodes (3) comprising information of the cooperating utility function of each of the nodes (3);
    calculating (S111) a Fiedler vector and a measure of the algebraic connectivity of the cooperation graph by applying a power iteration technique; and
    forming (S121) the nodes (3) into a plurality of clusters on the basis of the calculated Fiedler vector and algebraic connectivity, wherein

    the power iteration technique comprises the steps of:

    calculating (S113) a consensus matrix derived from the cooperation graph;
    initialising (S115) two variables, x and y, for each node to initial values, wherein x represents the Fiedler vector element for the node and y represents the algebraic connectivity for the node;
    performing (S143) a consensus averaging on the values of x using an average squared disagreement for the values of x among the nodes (3); and
    deriving updated values for x and y at each node using the results of the consensus averaging; wherein the step of performing the consensus averaging comprises each node (3) determining its average squared disagreement between its state and the states of its neighbours, $e_i^2(k)$, of the form:

$$e_i^2(k) = \sum_{j \in N(i)} \left( x_i(k) - x_j(k) \right)^2$$

    where $k$ denotes the index of a current iteration of the consensus averaging, $i$ is the index of the considered node (3) and $j$ is the index of the neighbouring node (3) of the node $i$ in the cooperation graph; and

$N$(i) is the set of neighbours of node i in the cooperation graph.

2. A method according to claim 1, wherein the average quadratic form of the Laplacian matrix,

$$e(k) = \sum_{i=1}^{n} \sum_{j=1}^{n} L_{i,j} x_i(k) x_j(k),$$

where $L_{i,j}$ is the value of the Laplacian at the line $i$ and the column $j$, is approximated as the average disagreement function, e(k), between the states of the nodes (3) in the graph, such that

$$e(k) \approx \sum_{i=1}^{n} e_i^2(k).$$

3. A method according to claim 2, wherein the step of performing the consensus averaging further comprises each node (3) initialising its state as the vector:

$$\underline{z}_i(0) = [x_i(k)^2 \; x_i(k) e_i^2(k)]$$

where $x_i(k)$ is the state of the node $i$ at the iteration $k$ of the stochastic power iteration;

$x_i(k)^2$ is the squared state of the node $i$ at the iteration $k$ of the stochastic power iteration; and $e_i^2(k)$ is the squared disagreement between the state of the node $i$ and the state of the neighbouring nodes $j \in N(i)$; and where the consensus averaging update equation is given by:

$$\underline{z}_i(m+1) = \underline{z}_i(m) - \varepsilon_c \sum_{j \in N(i)} \underline{z}_j(m)$$

where $m$ is the iteration index of the consensus averaging;
the parameter $\varepsilon_c$ controls the convergence rate of the consensus averaging and the amount of the states of the neighbouring nodes (3) to be included in the update of the node $i$.

4. A method according to claim 3, wherein the step of performing the consensus averaging terminates when the state variation, $\delta_z$, of all of the nodes (3) in the network between iterations in the consensus averaging is lower than a predetermined threshold, wherein:

$$\delta_z = \left\| z_i(k+1) - z_i(k) \right\|.$$

5. A method according to claim 4, wherein x and y are estimated for an iteration using equations of the form:

$$y_0(k) = 1 - \varepsilon \frac{e(k)}{m_{x^2}(k)} - \frac{1}{n} \frac{m_x^2(k)}{m_{x^2}(k)}$$

$$x_i(k+1) = \frac{1}{\Omega_x(k)} \left( x_i(k) - \varepsilon \sum_{j \in N(i)} x_j(k) - \frac{1}{n} m_x(k) \right)$$

$$y(k+1) = y(k) + \alpha(y_0(k) - y(k))$$

where n is the set of all nodes (3) in the communications system; and
$\Omega$ is a normalisation factor.

6. A method according to claim 5 wherein the normalisation factor, $\Omega$, takes the form of:

$$\Omega_x(k) = m_{x^2}(k) + \frac{(n-2)}{n}m_x^2(k) + 2e(k),$$

$$\Omega_x(k) = m_{x^2}(k)$$

or

$$\Omega_x(k) = m_{x^2}(k) + \frac{(n-2)}{n}m_x^2(k) + 2e(k) + 2\frac{m_x(k)\varepsilon \overline{e}_x(k)}{n} + \frac{\varepsilon^2 \overline{e}_x(k)^2}{n}$$

$$\overline{e}(k) = \sum_{i=1}^{n} e_i(k).$$

where $\overline{e}(k)$ is defined as the average norm 1 disagreement,

7. A method according to any preceding claim, wherein the power iteration technique is repeatedly applied until the magnitude of the value $\|y(k+1)-y(k)\|$ is below a predetermined threshold.

8. A method according to any preceding claim, wherein the cooperation utility function comprises one or more of:

   i) a function of the inverse of the transmission delay between each node (3) and a wired core network;
   ii) a function of the inverse of the transmission delay between nodes (3);
   iii) a function of the current loading or resource utilisation of each node (3);
   iv) a function of the available communication bandwidth provided by each node (3); or
   v) a function of the signal to noise and interference ratio, SINR at each node (3).

9. A method according to claim 8, wherein the cooperation utility function is a differential cooperation utility function that is calculated on the basis of the relative values of the cooperating utility function at each node (3) with respect to another node (3) in the telecommunications system.

10. A method according to any preceding claim, wherein the cooperation graph comprises links between nodes (3) and wherein two nodes (3) are linked if the value of the cooperation utility function between them is below a threshold value.

11. A method according to any preceding claim, wherein the nodes (3) are divided into two clusters, and each node (3) is a member of a first cluster if the Fiedler vector entry for that node (3) is positive.

12. A method according to any preceding claim wherein the modified consensus matrix, B, is defined by:

$$B = W - \frac{1}{N}\underline{1}\underline{1}^T$$

where

$$W = I - \varepsilon L$$

and where:

   I is the identity matrix;
   N is the number of nodes in the graph;
   L is the Laplacian matrix of the graph;
   $\varepsilon$ is a small number that is a function of the maximum eigenvalue of the Laplacian matrix;
   $\underline{1}$ is vector having entries that are all 1; and
   $\underline{1}^T$ is the transpose of vector $\underline{1}$.

13. An apparatus for determining the clustering of nodes (3) in a telecommunications system, comprising a plurality of nodes (3), each of the nodes (3) being configured to communicate with a user equipment (5), the apparatus comprising:

> means for determining a cooperation utility function for each of the plurality of nodes (3), the cooperation utility function comprising a measure indicative of a capability of the respective node (3) to cooperate with another node (3) in providing communications with the user equipment (5);
> means for forming a cooperation graph of the plurality of nodes (3) comprising information of the cooperating utility function of each of the nodes (3);
> means for calculating a Fiedler vector and a measure of the algebraic connectivity of the cooperation graph by applying a power iteration technique; and
> means for forming the nodes (3) into a plurality of clusters on the basis of the calculated Fiedler vector and algebraic connectivity, wherein

the means for calculating a Fiedler vector and a measure of the algebraic connectivity comprises:

> means for calculating a consensus matrix derived from the cooperation graph;
> means for initialising two variables, x and y, for each node (3) to initial values, wherein x represents the Fiedler vector element for the node (3) and y represents the algebraic connectivity for the node (3);
> means for performing a consensus averaging on the values of x using an average squared disagreement for the values of x among the nodes (3); and
> means for deriving updated values for x and y at each node (3) using the results of the consensus averaging, wherein
> wherein the means for performing the consensus averaging are configured to, for each node (3), determine its average squared disagreement between its state and the states of its neighbours, $e_i^2(k)$, of the form:

$$e_i^2(k) = \sum_{j \in N(i)} \left( x_i(k) - x_j(k) \right)^2$$

> where $k$ denotes the index of a current iteration of the consensus averaging, $i$ is the index of the considered node (3) and $j$ is the index of the neighbouring node (3) of the node $i$ in the cooperation graph; and
> $N$(i) is the set of neighbours of node i in the cooperation graph.

**14.** A computer program product comprising computer readable instructions which, when run on a computer system, cause the computer system to perform the method of any of claims 1 to 12.

**15.** A computer readable medium comprising the computer program product according to claim 14.

**Patentansprüche**

**1.** Verfahren zur Clusterung von Knoten (3) in einem Telekommunikationssystem, mehrere Knoten (3) umfassend, wobei jeder der Knoten (3) dafür ausgelegt ist, mit einer Benutzereinrichtung (5) zu kommunizieren, wobei das Verfahren umfasst:

> Bestimmen einer Kooperationsnutzenfunktion für jeden der mehreren Knoten (3), wobei die Kooperationsnutzenfunktion ein Maß umfasst, das für eine Fähigkeit des betreffenden Knotens (3) indikativ ist, zur Bereitstellung von Kommunikation mit der Benutzereinrichtung (5) mit einem anderen Knoten (3) zu kooperieren;
> Erzeugen (S101) eines Kooperationsgraphen der mehreren Knoten (3), umfassend Informationen der kooperierenden Nutzenfunktion jedes der Knoten (3);
> Berechnen (S111) eines Fiedler-Vektors und eines Maßes der algebraischen Konnektivität des Kooperationsgraphen durch Anwenden eines Potenziterationsverfahrens (Power Iteration); und
> Ausbilden (S121) der Knoten (3) zu mehreren Clustern auf Basis des berechneten Fiedler-Vektors und der berechneten algebraischen Konnektivität, wobei das Potenziterationsverfahren die folgenden Schritte umfasst:

> > Berechnen (S113) einer Konsensmatrix, die aus dem Kooperationsgraphen abgeleitet ist;

Initialisieren (S115) von zwei Variablen, x und y, für jeden Knoten auf Anfangswerte, wobei x das Fiedler-Vektor-Element für den Knoten repräsentiert und y die algebraische Konnektivität für den Knoten repräsentiert;

Durchführen (S143) einer Konsensmittelung (Consensus Averaging) über die Werte von x mithilfe einer mittleren quadratischen Abweichung (Average Squared Disagreement) für die Werte von x zwischen den Knoten (3); und

Ableiten aktualisierter Werte für x und y an jedem Knoten mithilfe der Ergebnisse der Konsensmittelung;

wobei der Schritt des Durchführens der Konsensmittelung umfasst, dass jeder Knoten (3) seine mittlere quadratische Abweichung zwischen dem eigenen Zustand und den Zuständen seiner Nachbarn, $e_i^2(k)$, in folgender Form berechnet:

$$e_i^2(k) = \sum_{j \in N(i)} \left( x_i(k) - x_j(k) \right)^2$$

wobei $k$ den Index einer aktuellen Iteration der Konsensmittelung bezeichnet, $i$ der Index des betrachteten Knotens (3) ist und $j$ der Index des Nachbarknotens (3) des Knotens $i$ im Kooperationsgraphen ist; und $N(i)$ die Gruppe von Nachbarn des Knotens i im Kooperationsgraphen ist.

2. Verfahren nach Anspruch 1, wobei die mittlere quadratische Form der Laplace-Matrix,

$$e(k) = \sum_{i=1}^{n} \sum_{j=1}^{n} L_{i,j} x_i(k) x_j(k)$$

, wobei $L_{i,j}$ der Wert der Laplaceschen an der Zeile $i$ und der Spalte $j$ ist, als mittlere Abweichungsfunktion mittlere Abweichungsfunktion, e(k), zwischen den Zuständen der Knoten (3) im Graphen angenähert wird, so dass

$$e(k) \approx \sum_{i=1}^{n} e_i^2(k)$$

.

3. Verfahren nach Anspruch 2, wobei der Schritt des Durchführens der Konsensmittelung ferner umfasst, dass jeder Knoten (3) seinen Zustand als folgenden Vektor initialisiert:

$$\underline{z}_i(0) = [x_i(k)^2 \; x_i(k) e_i^2(k)]$$

wobei $x_i(k)$ der Zustand des Knotens $i$ bei der Iteration $k$ der stochastischen Potenziteration ist; $x_i(k)^2$ der Quadratzustand des Knotens $i$ bei der Iteration $k$ der stochastischen Potenziteration ist; und $e_i^2(k)$ die quadratische Abweichung zwischen dem Zustand des Knotens $i$ und dem Zustand der Nachbarknoten $j \in N(i)$ ist;

und wobei die Gleichung zur Aktualisierung der Konsensmittelung wie folgt gegeben ist:

$$\underline{z}_i(m+1) = \underline{z}_i(m) - \varepsilon_c \sum_{j \in N(i)} \underline{z}_j(m)$$

wobei $m$ der Iterationsindex der Konsensmittelung ist; wobei der Parameter $\varepsilon_c$ die Konvergenzrate der Konsensmittelung und den Betrag der Zustände der Nachbarknoten (3), die in die Aktualisierung des Knotens $i$ einfließen sollen, steuert.

4. Verfahren nach Anspruch 3, wobei der Schritt des Durchführens der Konsensmittelung endet, wenn die Zustandsvariation, $\delta_z$, aller Knoten (3) im Netzwerk zwischen Iterationen in der Konsensmittelung geringer ist als ein vorbe-

stimmter Schwellwert, wobei:

$$\delta_z = \left\| z_i(k+1) - z_i(k) \right\|.$$

5. Verfahren nach Anspruch 4, wobei x und y für eine Iteration mithilfe von Gleichungen der folgenden Form geschätzt werden:

$$y_0(k) = 1 - \varepsilon \frac{e(k)}{m_{x^2}(k)} - \frac{1}{n} \frac{m_x^2(k)}{m_{x^2}(k)}$$

$$x_i(k+1) = \frac{1}{\Omega_x(k)} \left( x_i(k) - \varepsilon \sum_{j \in N(i)} x_j(k) - \frac{1}{n} m_x(k) \right)$$

$$y(k+1) = y(k) + \alpha \left( y_0(k) - y(k) \right)$$

wobei n die Gruppe aller Knoten (3) im Kommunikationssystem ist; und
$\Omega$ ein Normalisierungsfaktor ist.

6. Verfahren nach Anspruch 5, wobei der Normalisierungsfaktor, $\Omega$, folgende Form hat:

$$\Omega_x(k) = m_{x^2}(k) + \frac{(n-2)}{n} m_x^2(k) + 2e(k) \quad ,$$

$$\Omega_x(k) = m_{x^2}(k)$$

oder

$$\Omega_x(k) = m_{x^2}(k) + \frac{(n-2)}{n} m_x^2(k) + 2e(k) + 2\frac{m_x(k)\varepsilon \overline{e}_x(k)}{n} + \frac{\varepsilon^2 \overline{e}_x(k)^2}{n}$$

$$\overline{e}(k) = \sum_{i=1}^{n} e_i(k)$$

wobei $\overline{e}(k)$ als die mittlere Norm-1-Abweichung, $\quad$ definiert ist.

7. Verfahren nach einem der vorhergehenden Ansprüche, wobei das Potenziterationsverfahren wiederholt angewandt wird, bis die Größe des Wertes $\|y(k+1)-y(k)\|$ unter einem vorbestimmten Schwellwert liegt.

8. Verfahren nach einem der vorhergehenden Ansprüche, wobei die Kooperationsnutzenfunktion eines oder mehrere der folgenden umfasst:

i) eine Funktion des Kehrwertes der Übertragungsverzögerung zwischen jedem Knoten (3) und einem drahtgebundenen Kernnetzwerk;
ii) eine Funktion des Kehrwertes der Übertragungsverzögerung zwischen Knoten (3);
iii) eine Funktion der aktuellen Belastung oder Ressourcennutzung jedes Knotens (3);
iv) eine Funktion der verfügbaren Kommunikationsbandbreite, die von jedem Knoten (3) bereitgestellt wird; oder

v) eine Funktion des Signal-Geräusch-plus-Störungs-Abstands (Signal To Noise And Interference Ratio, SINR) an jedem Knoten (3).

9. Verfahren nach Anspruch 8, wobei die Kooperationsnutzenfunktion eine differenzielle Kooperationsnutzenfunktion ist, die auf Basis der relativen Werte der kooperierenden Nutzenfunktion an jedem Knoten (3) bezogen auf einen anderen Knoten (3) im Telekommunikationssystem berechnet wird.

10. Verfahren nach einem der vorhergehenden Ansprüche, wobei der Kooperationsgraph Verbindungen zwischen Knoten (3) umfasst und wobei zwei Knoten (3) verbunden werden, wenn der Wert der Kooperationsnutzenfunktion zwischen ihnen unter einem Schwellwert liegt.

11. Verfahren nach einem der vorhergehenden Ansprüche, wobei die Knoten (3) in zwei Cluster geteilt werden und jeder Knoten (3) Mitglied eines ersten Clusters ist, wenn der Fiedler-Vektor-Eintrag für diesen Knoten (3) positiv ist.

12. Verfahren nach einem der vorhergehenden Ansprüche wobei die modifizierte Konsensmatrix, B, wie folgt definiert ist:

$$B = W - \frac{1}{N}\underline{1}\underline{1}^T$$

wobei

$$W = I - \varepsilon L$$

und wobei:

I die Identitätsmatrix ist;
N die Anzahl der Knoten im Graphen ist;
L die Laplace-Matrix des Graphen ist;
$\varepsilon$ eine kleine Zahl ist, die eine Funktion des maximalen Eigenwertes der Laplace-Matrix ist;
$\underline{1}$ ein Vektor mit Einträgen ist, die sämtlich 1 lauten; und
$\underline{1}^T$ die Transponierte des Vektors $\underline{1}$ ist.

13. Vorrichtung zum Bestimmen der Clusterung von Knoten (3) in einem Telekommunikationssystem, mehrere Knoten (3) umfassend, wobei jeder der Knoten (3) dafür ausgelegt ist, mit einer Benutzereinrichtung (5) zu kommunizieren, wobei die Vorrichtung umfasst:

Mittel zum Bestimmen einer Kooperationsnutzenfunktion für jeden der mehreren Knoten (3), wobei die Kooperationsnutzenfunktion ein Maß umfasst, das für eine Fähigkeit des betreffenden Knotens (3) indikativ ist, zur Bereitstellung von Kommunikation mit der Benutzereinrichtung (5) mit einem anderen Knoten (3) zu kooperieren;
Mittel zum Erzeugen eines Kooperationsgraphen der mehreren Knoten (3), umfassend Informationen der kooperierenden Nutzenfunktion jedes der Knoten (3);
Mittel zum Berechnen eines Fiedler-Vektors und eines Maßes der algebraischen Konnektivität des Kooperationsgraphen durch Anwenden eines Potenziterationsverfahrens; und
Mittel zum Ausbilden der Knoten (3) zu mehreren Clustern auf Basis des berechneten Fiedler-Vektors und der berechneten algebraischen Konnektivität, wobei
das Mittel zum Berechnen eines Fiedler-Vektors und eines Maßes der algebraischen Konnektivität umfasst:

Mittel zum Berechnen einer Konsensmatrix, die aus dem Kooperationsgraphen abgeleitet ist;
Mittel zum Initialisieren von zwei Variablen, x und y, für jeden Knoten (3) auf Anfangswerte, wobei x das Fiedler-Vektor-Element für den Knoten (3) repräsentiert und y die algebraische Konnektivität für den Knoten (3) repräsentiert;
Mittel zum Durchführen einer Konsensmittelung über die Werte von x mithilfe einer mittleren quadratischen Abweichung für die Werte von x zwischen den Knoten (3); und
Mittel zum Ableiten aktualisierter Werte für x und y an jedem Knoten (3) mithilfe der Ergebnisse der Konsensmittelung, wobei
wobei die Mittel zum Durchführen der Konsensmittelung dafür ausgelegt sind, für jeden Knoten (3) seine mittlere quadratische Abweichung zwischen dem eigenen Zustand und den Zuständen seiner Nachbarn,

$$e_i^2(k)$$

, in folgender Form zu berechnen:

$$e_i^2(k) = \sum_{j \in N(i)} \left( x_i(k) - x_j(k) \right)^2$$

wobei *k* den Index einer aktuellen Iteration der Konsensmittelung bezeichnet, *i* der Index des betrachteten Knotens (3) ist und *j* der Index des Nachbarknotens (3) des Knotens *i* im Kooperationsgraphen ist; und

*N(i)* die Gruppe von Nachbarn des Knotens i im Kooperationsgraphen ist.

14. Computerprogrammprodukt, umfassend computerlesbare Anweisungen, die, wenn sie auf einem Computersystem ausgeführt werden, das Computersystem veranlassen, das Verfahren nach einem der Ansprüche 1 bis 12 auszuführen.

15. Computerlesbares Medium, umfassend das Computerprogrammprodukt nach Anspruch 14.

**Revendications**

1. Procédé de mise en grappes de noeuds (3) dans un système de télécommunications, comprenant une pluralité de noeuds (3), chacun des noeuds (3) étant configuré pour communiquer avec un équipement utilisateur (5), le procédé comprenant :

la détermination d'une fonction d'utilité de coopération pour chacun de la pluralité de noeuds (3), la fonction d'utilité de coopération comprenant une mesure indicative d'une capacité du noeud (3) respectif à coopérer avec un autre noeud (3) pour fournir des communications avec l'équipement utilisateur (5) ;
la formation (S101) d'un graphique de coopération de la pluralité de noeuds (3) comprenant des informations de la fonction d'utilité de coopération de chacun des noeuds (3) ;
le calcul (S111) d'un vecteur de Fiedler et d'une mesure de la connectivité algébrique du graphique de coopération en appliquant une technique d'itération de puissance ; et
la formation (S121) des noeuds (3) en une pluralité de grappes sur la base du vecteur de Fiedler et de la connectivité algébrique calculés, dans lequel
la technique d'itération de puissance comprend les étapes de :

calcul (S113) d'une matrice de consensus dérivée du graphique de coopération ;
initialisation (S115) de deux variables, x et y, pour chaque noeud à des valeurs initiales, dans lequel x représente l'élément de vecteur de Fiedler pour le noeud et y représente la connectivité algébrique pour le noeud ;
la réalisation (S143) d'un calcul de moyenne de consensus sur les valeurs de x à l'aide d'un désaccord au carré moyen pour les valeurs de x parmi les noeuds (3) ; et
la dérivation de valeurs mises à jour pour x et y au niveau de chaque noeud à l'aide des résultats du calcul de moyenne de consensus ;

dans lequel l'étape de réalisation du calcul de moyenne de consensus comprend la détermination par chaque noeud (3) de son désaccord au carré moyen entre son état et les états de ses voisins, $e_i^2(k)$, sous la forme :

$$e_i^2(k) = \sum_{j \in N(i)} \left( x_i(k) - x_j(k) \right)^2$$

où *k* indique l'indice d'une itération actuelle du calcul de moyenne de consensus, *i* est l'indice du noeud (3) pris en considération et *j* est l'indice du noeud (3) voisin du noeud *i* dans le graphique de coopération ; et
*N*(i) est l'ensemble de voisins du noeud *i* dans le graphique de coopération.

2. Procédé selon la revendication 1, dans lequel la forme quadratique moyenne de la matrice Laplacienne,

$$e(k) = \sum_{i=1}^{n} \sum_{j=1}^{n} L_{i,j} x_i(k) x_j(k)$$

, où $L_{i,j}$ est la valeur de la matrice Laplacienne à la ligne $i$ et la colonne $j$, est approximée en tant que fonction de désaccord moyen, e(k), entre les états des noeuds (3) dans le graphique, de sorte que

$$e(k) \approx \sum_{i=1}^{n} e_i^2(k)$$

.

3. Procédé selon la revendication 2, dans lequel l'étape de réalisation du calcul de moyenne de consensus comprend en outre l'initialisation par chaque noeud (3) de son état en tant que vecteur : $\underline{z}_i(0) = [x_i(k)^2 \; x_i(k) \; e_i^2(k)]$

où $x_i(k)$ est l'état du noeud $i$ à l'itération $k$ de l'itération de puissance stochastique ;
$x_i(k)^2$ est l'état au carré du noeud $i$ à l'itération $k$ de l'itération de puissance stochastique ; et
$e_i^2(k)$ est le désaccord au carré entre l'état du noeud $i$ et l'état des noeuds voisins $j \in N(i)$ ; et
où l'équation de mise à jour de calcul de moyenne de consensus est donnée par :

$$\underline{z}_i(m+1) = \underline{z}_i(m) - \varepsilon_c \sum_{j \in N(i)} \underline{z}_j(m)$$

où $m$ est l'indice d'itération du calcul de moyenne de consensus ;
le paramètre $\varepsilon_c$ commande le taux de convergence du calcul de moyenne de consensus et la quantité des états des noeuds (3) voisins à inclure dans la mise à jour du noeud $i$.

4. Procédé selon la revendication 3, dans lequel l'étape de réalisation du calcul de moyenne de consensus se termine lorsque la variation d'état, $\delta_z$, de tous les noeuds (3) dans le réseau entre des itérations dans le calcul de moyenne de consensus est inférieure à un seuil prédéterminé,
dans lequel :

$$\delta_z = \left\| z_i(k+1) - z_i(k) \right\|$$

.

5. Procédé selon la revendication 4, dans lequel x et y sont estimés pour une itération à l'aide d'équations de la forme :

$$y_0(k) = 1 - \varepsilon \frac{e(k)}{m_{x^2}(k)} - \frac{1}{n} \frac{m_x^2(k)}{m_{x^2}(k)}$$

$$x_i(k+1) = \frac{1}{\Omega_x(k)} \left( x_i(k) - \varepsilon \sum_{j \in N(i)} x_j(k) - \frac{1}{n} m_x(k) \right)$$

$$y(k+1) = y(k) + \alpha \left( y_0(k) - y(k) \right)$$

où n est l'ensemble de tous les noeuds (3) dans le système de communications ; et
$\Omega$ est un facteur de normalisation.

6. Procédé selon la revendication 5, dans lequel le facteur de normalisation, $\Omega$, prend la forme de :

$$\Omega_x(k) = m_{x^2}(k) + \frac{(n-2)}{n} m_x^2(k) + 2e(k),$$

$$\Omega_x(k) = m_{x^2}(k)$$

ou

$$\Omega_x(k) = m_{x^2}(k) + \frac{(n-2)}{n} m_x^2(k) + 2e(k) + 2\frac{m_x(k)\varepsilon\,\overline{e}_x(k)}{n} + \frac{\varepsilon^2\,\overline{e}_x(k)^2}{n}$$

$$\overline{e}(k) = \sum_{i=1}^{n} e_i(k).$$

où $\overline{e}(k)$ est défini comme le désaccord de norme 1 moyen,

7. Procédé selon l'une quelconque des revendications précédentes, dans lequel la technique d'itération de puissance est appliquée de façon répétée jusqu'à ce que la grandeur de la valeur $\|y(k+1) - y(k)\|$ soit en dessous d'un seuil prédéterminé.

8. Procédé selon l'une quelconque des revendications précédentes, dans lequel la fonction d'utilité de coopération comprend une ou plusieurs parmi :

   i) une fonction de l'inverse du délai de transmission entre chaque noeud (3) et un réseau central câblé ;
   ii) une fonction de l'inverse du délai de transmission entre les noeuds (3) ;
   iii) une fonction de la charge ou de l'utilisation de ressource actuelle de chaque noeud (3) ;
   iv) une fonction de la largeur de bande de communication disponible fournie par chaque noeud (3) ; ou
   v) une fonction du rapport signal sur interférence plus bruit, SINR au niveau de chaque noeud (3).

9. Procédé selon la revendication 8, dans lequel la fonction d'utilité de coopération est une fonction d'utilité de coopération différentielle qui est calculée sur la base des valeurs relatives de la fonction d'utilité de coopération au niveau de chaque noeud (3) par rapport à un autre noeud (3) dans le système de télécommunications.

10. Procédé selon l'une quelconque des revendications précédentes, dans lequel le graphique de coopération comprend des liens entre des noeuds (3) et dans lequel deux noeuds (3) sont liés si la valeur de la fonction d'utilité de coopération entre eux est en dessous d'une valeur seuil.

11. Procédé selon l'une quelconque des revendications précédentes, dans lequel les noeuds (3) sont divisés en deux grappes, et chaque noeud (3) est un membre d'une première grappe si l'entrée de vecteur de Fiedler pour ce noeud (3) est positive.

12. Procédé selon l'une quelconque des revendications précédentes, dans lequel la matrice de consensus modifiée, B, est définie par :

$$B = W - \frac{1}{n}\mathbf{1}\mathbf{1}^T$$

où

$$W = I - \varepsilon L$$

et où :

I est la matrice d'identité ;

N est le nombre de noeuds dans le graphique ;

L est la matrice Laplacienne du graphique ;

ε est un petit nombre qui est une fonction de la valeur propre maximale de la matrice Laplacienne ;

$\underline{1}$ est un vecteur ayant des entrées qui valent toutes 1 ; et

$\underline{1}^T$ est la transposée du vecteur $\underline{1}$.

13. Appareil pour déterminer la mise en grappes de noeuds (3) dans un système de télécommunications, comprenant une pluralité de noeuds (3), chacun des noeuds (3) étant configuré pour communiquer avec un équipement utilisateur (5), l'appareil comprenant :

un moyen pour déterminer une fonction d'utilité de coopération pour chacun de la pluralité de noeuds (3), la fonction d'utilité de coopération comprenant une mesure indicative d'une capacité du noeud (3) respectif à coopérer avec un autre noeud (3) pour fournir des communications avec l'équipement utilisateur (5) ;

un moyen pour former un graphique de coopération de la pluralité de noeuds (3) comprenant des informations de la fonction d'utilité de coopération de chacun des noeuds (3) ;

un moyen pour calculer un vecteur de Fiedler et une mesure de la connectivité algébrique du graphique de coopération en appliquant une technique d'itération de puissance ; et

un moyen pour former les noeuds (3) en une pluralité de grappes sur la base du vecteur de Fiedler et de la connectivité algébrique calculés, dans lequel le moyen pour calculer un vecteur de Fiedler et une mesure de la connectivité algébrique comprend :

un moyen pour calculer une matrice de consensus dérivée du graphique de coopération ;

un moyen pour initialiser deux variables, x et y, pour chaque noeud (3) à des valeurs initiales, dans lequel x représente l'élément de vecteur de Fiedler pour le noeud (3) et y représente la connectivité algébrique pour le noeud (3) ;

un moyen pour réaliser un calcul de moyenne de consensus sur les valeurs de x à l'aide d'un désaccord au carré moyen pour les valeurs de x parmi les noeuds (3) ; et

un moyen pour dériver des valeurs mises à jour pour x et y au niveau de chaque noeud (3) à l'aide des résultats du calcul de moyenne de consensus, dans lequel

dans lequel le moyen pour réaliser le calcul de moyenne de consensus est configuré, pour chaque noeud (3), pour déterminer son désaccord au carré moyen entre son état et les états de ses voisins, $e_i^2(k)$, sous la forme :

$$e_i^2(k) = \sum_{j \in N(i)} \left( x_i(k) - x_j(k) \right)^2$$

où $k$ indique l'indice d'une itération actuelle du calcul de moyenne de consensus, $i$ est l'indice du noeud (3) pris en considération et $j$ est l'indice du noeud (3) voisin du noeud $i$ dans le graphique de coopération ; et $N(i)$ est l'ensemble de voisins du noeud $i$ dans le graphique de coopération.

14. Produit programme d'ordinateur comprenant des instructions lisibles par ordinateur qui, lorsqu'elles sont exécutées sur un système d'ordinateur, amènent le système d'ordinateur à réaliser le procédé de l'une quelconque des revendications 1 à 12.

15. Support lisible par ordinateur comprenant le produit programme d'ordinateur selon la revendication 14.

2

**Coordination GW**

11

**Measurements
For calculating the
costs**

((●))

3

**AP**

5

((●))

3

((●))

3

((●))

3

((●))

3

((●))

3

((●))

3

# FIG. 1

FIG. 2

Evaluation/calculation
of the cooperation
Graph — S101

Calculation of the
algebraic connectivity
and Fiedler vector — S111

Using Fiedler vector and algebraic
connectivity for cooperation
clusters formation — S121

# FIG. 3a

S103

Associate graph nodes with network nodes

S105 — Evaluate the cooperation utility functions of the nodes

} S101

Calculate the differential cooperation utility functions for the nodes

S107

Form the cooperation graph — S09

# FIG. 3b

**S113** — Calculate B

**S115** {
Choose initial conditions
$\underline{x}\,[\,0\,],\quad y\,[\,0\,]$

Set the index
$k = 0$
}

## FIG. 3c

**S117** — Distributed calculation of the Rayleigh coefficient
$$y_0[k] = \frac{\underline{x}^T[k]B\underline{x}[k]}{\underline{x}^T[k]\underline{x}[k]}$$

**S119** {
Evaluate the estimate of the largest eigenvalue of B
$$y[k+1] = y[k] + \alpha[k](y_0[k] - y[k])$$

Evaluate the estimate of the algebraic connectivity
$$z[k] = (1 - y[k])/\bar{\varepsilon}$$

Evaluate the estimate of the Fiedler vector
$$\underline{x}[k+1] = \frac{B\underline{x}[k]}{\|B\underline{x}[k]\|}$$
}

**S120** — Convergence ?

End ◄ **Yes** — Convergence ? — **no** ► $k = k+1$

**FIG. 3d**

S113 — Calculate B

Each node *i* starts with
random state and initial
estimate of the algebraic
connectivity

Choose initial conditions
$x_i[0], y[0]$

S115

Set the index
$k = 0$

State of the art 2
steps consensus
Averaging

S129 — Set $z_i = x_i[k]$

S131 — Consensus #1

S131a

S130

Output 1 :
$m = \frac{1}{N} \sum_{i=1}^{N} x_i[k]$

Evaluate
$b_i = x_i[k] - \varepsilon \sum_{j \in N(i)} (x_j[k] - x_i[k]) - m$ — S133

S134b

Weighted
Consensus #2 — S134

S134a

S131b

Output 2:
$m_2 = \frac{1}{N} \sum_{i=1}^{N} x_i^2[k]$

Output b2:
$m_2(b) = \sum_{i=1}^{N} b_i$

Output b1:
$m = \frac{1}{N} \sum_{i=1}^{N} b_i x_i[k]$

(Output_b1 x output_b2)/
(NxOutput2) — S135

$y_0 = \frac{1}{\sum_{i=1}^{N} x_i^2[k]} \sum_{i=1}^{N} b_i x_i[k]$

S132

Calculation of $\Omega_x(k)$

S136

$y[k+1] = y[k] + \alpha[k](y_0[k] - y[k])$

**Update of y**

S137

$x_i(k+1) = \frac{1}{\Omega_x(k)} \left( x_i(k) - \varepsilon \sum_{j \in N(i)} x_j(k) - \frac{1}{n} m_x(k) \right)$

**Update of x**

S120

End ← **Yes** — $\delta = (y(k+1) - y(k)) \leq Th$ — **no** → $k=k+1$

## FIG. 3e

Choose initial conditions
$x_i[0], y[0]$

**Each node _i_ starts with random state and initial estimate of the algebraic connectivity**

S115

Set the index
$k = 0$

Calculate the disagreement
$\{e_i[k]\}^n_{i=1}$
— S141

Single step consensus — S143

$e[k]$   $m_{x^2}[k]$   $m_x[k]$

$$y_0[k] = 1 - \varepsilon \frac{e[k]}{m_{x^2}[k]} - \frac{(m_x[k])^2}{n\, m_{x^2}[k]}$$

S132

Calculation of $\Omega_x(k)$

$$y[k+1] = y[k] + \alpha[k](y_0[k] - y[k])$$

**Update of y**

S145

$$x_i(k+1) = \frac{1}{\Omega_x(k)}\left(x_i(k) - \varepsilon \sum_{j \in N(i)} x_j(k) - \frac{1}{n} m_x(k)\right)$$

**Each node calculate an estimate Of its fiedler vector value  Recieving normalizing factor from the consensus step**

**Update of x**

S149

End

$\delta = (y(k+1) - y(k)) \leq Th$

**Yes**                **no**

FIG. 4a

Cluster 1                              Cluster 2

FIG. 4b

S231

Gateway nodes set up clusters with neighbouring nodes

S233

Calculate the average value of the Fiedler vector for each cluster

S234

Add nodes to the cluster that have Fiedler vector value that is close to the average

Calculate the average Fiedler vector value variation in the network. Below threshold?

S235

Y    N

Stop    S237

# FIG. 5

S241

Nodes 3 exchange their Fiedler vector elements and update them to the average

Form clusters of nodes 3    S243

S245    Add new nodes to the clusters

Calculate the change in the average Fiedler vector value on the potential addition of a new node 3 to the cluster. Below threshold?

S247

Y    N

Stop    S249

# FIG. 6

FIG. 7

FIG. 8

Legend:
- Centralized scheme (baseline); $\lambda_0 = 0.9714$
- Single step consensus based (proposed technique); $\lambda_0 = 0.7943$
- State of the art distributed (2 steps consensus); $\lambda_0 = 0.83$

Y-axis: CDF
X-axis: $\lambda$ (algebraic connectivity)

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Seeing the bigger picture: How nodes can learn their place within a complex ad hoc network topology. **BERTRAND A et al.** IEEE Signal Processing Magazine. IEEE Service Center, 01 May 2013, vol. 30, 71-82

- Distributed estimation and control of algebraic connectivity over random graphs. **DI LORENZO PAOLO et al.** IEEE transactions on signal processing. IEEE Service Center, 01 November 2014, vol. 62, 5615-5628